# EUROPEAN PATENT APPLICATION

(11) **EP 3 674 196 A1**
(43) Date of publication of application: **01.07.2020**
(21) Application number: 19776706.4
(22) Date of filing: 26.02.2019
(51) Int. Cl.: B62K 25/20

(54) **LEANING VEHICLE**

(30) Priority: 27.03.2018 JP 2018059764
(71) Applicant: YAMAHA HATSUDOKI KABUSHIKI KAISHA, Iwata-shi Shizuoka 438-8501 (JP)
(72) Inventor: MIKI, Masayuki, Iwata-shi, Shizuoka 438-8501 (JP)
(74) Representative: Stöckeler, Ferdinand
(86) International application number: PCT/JP2019/007168
(87) International publication number: WO 2019/187885

(57) **Abstract**

It is an object of the present invention to provide a new leaning vehicle which can obtain advantageous effects equivalent to advantageous effects which can be obtained when appropriate deflection characteristics and torsional characteristics are given to a swing arm.

A leaning vehicle according to the present teaching includes a support member which is provided between a swing-arm support shaft and a vehicle body, and which has a structure in which a magnitude of moment of a force required for rotating the swing-arm support shaft about a roll axis of the leaning vehicle by a unit angle with respect to the vehicle body is different from a magnitude of moment of a force required for rotating the swing-arm support shaft about a yaw axis of the leaning vehicle by the unit angle with respect to the vehicle body.

## Description

### TECHNICAL FIELD

The present teaching relates to a leaning vehicle including a vehicle body which leans in a leaning-vehicle leftward direction when the leaning vehicle turns left, and which leans in a leaning-vehicle rightward direction when the leaning vehicle turns right.

### BACKGROUND ART

As disclosed in Patent Literature 1, it is known that higher rigidity of a rear swing arm of a motorcycle does not always provide a high degree of comfort, such as riding comfort of the motorcycle. In other words, it is known that when the rear swing arm possesses deflection characteristics and torsional characteristics in the up-down direction and in the left-right direction appropriately adjusted to characteristics of each motorcycle, the degree of comfort, such as riding comfort of the motorcycle, may be enhanced.

In view of the above, the motorcycle disclosed in Patent Literature 1 includes the rear swing arm described below. The rear swing arm includes a left arm portion, a right arm portion, a cross member, a left reinforcing member, and a right reinforcing member. The left arm portion and the right arm portion extend in the front-back direction. The cross member extends in the left-right direction. The cross member connects the left arm portion and the right arm portion with each other. The left reinforcing member is provided at a joint portion between the left arm portion and the cross member. The left reinforcing member includes a left upper plate portion and a left downwardly extending portion. The left upper plate portion has a right isosceles triangular shape when viewed in the downward direction. Two sides of the left upper plate portion which form the right angle are respectively joined to the left arm portion and the cross member. The left downwardly extending portion is bent downwardly with respect to the left upper plate portion from one side of the left upper plate portion which does not form the right angle. Further, the left downwardly extending portion has the structure in which a portion of a rectangular outer edge is cut away. The right reinforcing member has a structure which is left-right symmetrical to the left reinforcing member and hence, the description of the right reinforcing member is omitted.

In the rear swing arm having the above-mentioned configuration, the joint portion between the left arm portion and the cross member is reinforced by the left reinforcing member, and a joint portion between the right arm portion and the cross member is reinforced by the right reinforcing member and hence, the rear swing arm has high rigidity as a whole. However, a cut-away portion is formed on the left downwardly extending portion of the left reinforcing member, and a cut-away portion is formed on a right downwardly extending portion of the right reinforcing member. With such a configuration, the rear swing arm is allowed to have appropriate deflection characteristics and torsional characteristics. As a result, riding comfort of the motorcycle is enhanced.

### CITATION LIST

### PATENT LITERATURE

Patent Literature 1: Japanese Patent No. 5815170

### SUMMARY OF INVENTION

### TECHNICAL PROBLEM

It is an object of the present teaching to provide a new leaning vehicle which can obtain advantageous effects equivalent to advantageous effects which can be obtained when appropriate deflection characteristics and torsional characteristics are given to a swing arm.

### SOLUTION TO PROBLEM

The inventor of the present teaching have studied about the actions of a leaning vehicle which includes a swing arm to which appropriate deflection characteristics and torsional characteristics are given. As a result, the inventor of the present teaching have found the following. With the deformation of the swing arm, a rear wheel slightly rotates about a roll axis and/or a yaw axis with respect to a vehicle body which leans in the leaning-vehicle leftward direction when the leaning vehicle turns left, and which leans in the leaning-vehicle rightward direction when the leaning vehicle turns right. In other words, the inventor of the present teaching have found the following. A leaning vehicle with a drive wheel which can be slightly rotated about the roll axis and/or the yaw axis with respect to the vehicle body can obtain the advantageous effects equivalent to that of a leaning vehicle where appropriate deflection characteristics and torsional characteristics are given to a swing arm.

Accordingly, the inventor of the present teaching have studied about a method for causing a drive wheel to slightly rotate about the roll axis and/or the yaw axis with respect to the vehicle body. The inventor of the present teaching have focused on the supporting structure of the swing arm of the vehicle body which leans in the leaning-vehicle leftward direction when the leaning vehicle turns left, and which leans in the leaning-vehicle rightward direction when the leaning vehicle turns right. The leaning vehicle includes the vehicle body, a swing-arm support shaft, and the swing arm. The vehicle body leans in the leaning-vehicle leftward direction when the leaning vehicle turns left, and the vehicle body leans in the leaning-vehicle rightward direction when the leaning vehicle turns right. The swing-arm support shaft is supported on the vehicle body, and extends in the vehicle-body left-right direction. The swing arm is supported on the swing-arm support shaft at the front portion of the swing arm such that the swing arm can swing with respect to the vehicle body about the center axis of the swing-arm support shaft. In a general leaning vehicle, a swing arm is supported on the vehicle body such that the swing arm is prevented from rotating with respect to the vehicle body about axes (the roll axis or the yaw axis, for example) other than the center axis of the swing-arm support shaft which extends in the vehicle-body left-right direction.

On the other hand, the inventor of the present teaching have considered that it is effective to dispose an elastically deformable support member between the swing-arm support shaft and the vehicle body, for example. With such a configuration, the support member is elastically deformed, thus allowing the swing-arm support shaft to rotate about the roll axis or the yaw axis with respect to the vehicle body. Accordingly, the swing arm can rotate about the roll axis or the yaw axis with respect to the vehicle body so that the rear wheel can slightly rotate about the roll axis and/or the yaw axis with respect to the vehicle body.

The inventor of the present teaching have also found the following. By making the ease of elastic deformation of the support member when the swing-arm support shaft rotates about the roll axis different from the ease of elastic deformation of the support member when the swing-arm support shaft rotates about the yaw axis, the ease of rotation of the rear wheel about the roll axis and the ease of rotation of the rear wheel about the yaw axis can be set as desired. Accordingly, the inventor of the present teaching have found the following. By disposing, between the vehicle body and the swing arm, the support member having the property where the ease of elastic deformation of the support member when the swing-arm support shaft rotates about the roll axis is different from the ease of elastic deformation of the support member when the swing-arm support shaft rotates about the yaw axis, it is possible to obtain the advantageous effects equivalent to advantageous effects which can be obtained when appropriate deflection characteristics and torsional characteristics are given to the swing arm.

To solve the above-mentioned problems, the present invention adopts the following configurations.

A leaning vehicle of (1) includes:
a vehicle body which leans in a leaning-vehicle leftward direction when the leaning vehicle turns left, and which leans in a leaning-vehicle rightward direction when the leaning vehicle turns right, the vehicle body including a drive source configured to generate a driving force, and a drive-source support frame which supports the drive source;
a swing-arm support shaft supported on the vehicle body and extending in a vehicle-body left-right direction;
a swing arm where a front portion of the swing arm is supported on the swing-arm support shaft such that the swing arm is swingable with respect to the vehicle body about a center axis of the swing-arm support shaft;
a drive-wheel axle shaft supported on a rear portion of the swing arm and extending in the vehicle-body left-right direction;
a drive wheel which is supported on the drive-wheel axle shaft such that the drive wheel is rotatable about a center axis of the drive-wheel axle shaft, the drive wheel being rotated by a driving force generated by the drive source; and
a support member which is elastically deformable, the support member having at least one of structures (A) to (D), wherein
   (A) the support member has a structure in which the support member is provided between the swing-arm support shaft and the vehicle body, and a magnitude of moment of a force required for rotating the swing-arm support shaft about a roll axis of the leaning vehicle by a unit angle with respect to the vehicle body is different from a magnitude of moment of a force required for rotating the swing-arm support shaft about a yaw axis of the leaning vehicle by the unit angle with respect to the vehicle body,
   (B) the support member has a structure in which the support member is provided between the swing-arm support shaft and the swing arm, and a magnitude of moment of a force required for rotating the swing arm about the roll axis of the leaning vehicle by the unit angle with respect to the swing-arm support shaft is different from a magnitude of moment of a force required for rotating the swing arm about the yaw axis of the leaning vehicle by the unit angle with respect to the swing-arm support shaft,
   (C) the support member has a structure in which the support member is provided between the drive-wheel axle shaft and the swing arm, and a magnitude of moment of a force required for rotating the drive-wheel axle shaft about the roll axis of the leaning vehicle by the unit angle with respect to the swing arm is different from a magnitude of moment of a force required for rotating the drive-wheel axle shaft about the yaw axis of the leaning vehicle by the unit angle with respect to the swing arm, and
   (D) the support member has a structure in which the support member is provided between the drive-wheel axle shaft and the drive wheel, and a magnitude of moment of a force required for rotating the drive wheel about the roll axis of the leaning vehicle by the unit angle with respect to the drive-wheel axle shaft is different from a magnitude of moment of a force required for rotating the drive wheel about the yaw axis of the leaning vehicle by the unit angle with respect to the drive-wheel axle shaft.

According to the leaning vehicle of (1), it is possible to obtain advantageous effects equivalent to advantageous effects which can be obtained when appropriate deflection characteristics and torsional characteristics are given to the swing arm. To be more specific, in the leaning vehicle of (1), the support member has at least one of the structures (A) to (D). In the case where the support member has the structure (A), the magnitude of moment of a force required for rotating the swing-arm support shaft about the roll axis of the leaning vehicle by the unit angle with respect to the vehicle body is different from the magnitude of moment of a force required for rotating the swing-arm support shaft about the yaw axis of the leaning vehicle by the unit angle with respect to the vehicle body. In the case where the support member has the structure (B), the magnitude of moment of a force required for rotating the swing arm about the roll axis of the leaning vehicle by the unit angle with respect to the swing-arm support shaft is different from the magnitude of moment of a force required for rotating the swing arm about the yaw axis of the leaning vehicle by the unit angle with respect to the swing-arm support shaft. In the case where the support member has the structure (C), the magnitude of moment of a force required for rotating the drive-wheel axle shaft about the roll axis of the leaning vehicle by the unit angle with respect to the swing arm is different from the magnitude of moment of a force required for rotating the drive-wheel axle shaft about the yaw axis of the leaning vehicle by the unit angle with respect to the swing arm. In the case where the support member has the structure (D), the magnitude of moment of a force required for rotating the drive wheel about the roll axis of the leaning vehicle by the unit angle with respect to the drive-wheel axle shaft is different from the magnitude of moment of a force required for rotating the drive wheel about the yaw axis of the leaning vehicle by the unit angle with respect to the drive-wheel axle shaft. With such a configuration, the ease of rotation of the drive wheel about the roll axis is different from the ease of rotation of the drive wheel about the yaw axis. Accordingly, the ease of rotation of the drive wheel about the roll axis and the ease of rotation of the drive wheel about the yaw axis can be arbitrarily set by modifying the design of the support member. As a result, according to the leaning vehicle of (1), it is possible to obtain advantageous effects equivalent to advantageous effects which can be obtained when appropriate deflection characteristics and torsional characteristics are given to the swing arm. It is sufficient that the leaning vehicle of (1) has at least one of the structures (A) to (D). Therefore, the leaning vehicle of (1) may have two structures selected from the structures (A) to (D). The leaning vehicle of (1) may have three structures selected from the structures (A) to (D). The leaning vehicle of (1) may have all structures (A) to (D).

According to the leaning vehicle of (2), in the leaning vehicle of (1), the support member has the structure (A), and is provided between the swing-arm support shaft and the vehicle body such that the support member comes into contact with the swing-arm support shaft and the vehicle body.

The leaning vehicle of (3) is configured such that, in the leaning vehicle of (1), the support member has the structure (B), and is provided between the swing-arm support shaft and the swing arm such that the support member comes into contact with the swing-arm support shaft and the swing arm.

The leaning vehicle of (4) is configured such that, in the leaning vehicle of (1), the support member has the structure (C), and is provided between the drive-wheel axle shaft and the swing arm such that the support member comes into contact with the drive-wheel axle shaft and the swing arm.

The leaning vehicle of (5) is configured such that, in the leaning vehicle of (1),
the support member has the structure (D),
the leaning vehicle further includes a bearing provided between the drive wheel and the drive-wheel axle shaft,
the drive-wheel axle shaft penetrates the bearing in the vehicle-body left-right direction, and
the support member is provided between the bearing and the drive wheel such that the support member comes into contact with the bearing and the drive wheel.

The leaning vehicle of (6) is configured such that, in the leaning vehicle of (1),
the support member has the structure (A),
the leaning vehicle further includes a swing-arm-support-shaft support member which is supported on the vehicle body, and which supports the swing-arm support shaft, and
the support member is provided between the vehicle body and the swing-arm-support-shaft support member.

The leaning vehicle of (7) is configured such that, in the leaning vehicle of (1),
the support member has the structure (A),
the leaning vehicle further includes a swing-arm-support-shaft support member which is supported on the vehicle body, and which supports the swing-arm support shaft, and
the support member is provided between the swing-arm support shaft and the swing-arm-support-shaft support member such that the support member comes into contact with the swing-arm support shaft and the swing-arm-support-shaft support member.

The foregoing and other purposes, features, aspects and advantages of the teaching will become further apparent from the following detailed description of embodiments of the teaching given with reference to the accompanying drawings.

As used in this specification, the term "and/or" includes any and all combinations of one or more of the associated listed items.

As used in this specification, the terms "including," "comprising" or "having" and variations thereof specify the presence of stated features, steps, operations, elements, components, and/or their equivalents, but do not preclude one or more of steps, operations, elements, components, and/or groups thereof.

Unless otherwise defined, all terms (including technical and scientific terms) used in this specification have the same meaning as commonly understood by one skilled in the art to which the present teaching belongs.

Terms, such as those defined in commonly used dictionaries, should be interpreted as having a meaning that is consistent with their meaning in the context of the relevant art and the present disclosure and will not be interpreted in an idealized or overly formal sense unless expressly so defined in this specification.

In describing the teaching, it will be understood that a number of techniques and steps are disclosed. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, the specification and claims should be read with the understanding that such combinations are entirely within the scope of the teaching and the claims.

In the following description, for purposes of explanation, numerous specific details are set forth in order to provide a thorough understanding of the present teaching. It will be evident, however, to one skilled in the art that the present teaching may be practiced without these specific details. The present disclosure is to be considered as an exemplification of the teaching, and is not intended to limit the present teaching to the specific embodiments illustrated by the figures or description below.

### ADVANTAGEOUS EFFECTS OF INVENTION

The present teaching can obtain advantageous effects equivalent to advantageous effects which can be obtained when appropriate deflection characteristics and torsional characteristics are given to a swing arm.

### BRIEF DESCRIPTION OF DRAWINGS

[FIG. 1] FIG. 1 is a view of a leaning vehicle 1, 1a to 1f when the leaning vehicle 1, 1a to 1f is viewed in the rightward direction, and FIG. 1 is also a cross-sectional view of a portion surrounded by a circle C.
[FIG. 2] FIG. 2 is a view of a support member 21, 21a to 21f, 22, 22a, 22b, 22f, 22g as viewed in the rightward direction r.
[FIG. 3] FIG. 3 is a cross-sectional view of the portion surrounded by the circle C shown in FIG. 1.
[FIG. 4] FIG. 4 is a cross-sectional view of a portion surrounded by a circle D shown in FIG. 1.
[FIG. 5] FIG. 5 is a cross-sectional view of a portion surrounded by a circle D shown in FIG. 1.
[FIG. 6] FIG. 6 is an enlarged view of a connecting portion between a drive-source support frame 2 of the leaning vehicle 1d to 1f, a swing-arm-support-shaft support member 100, and a swing arm 8.
[FIG. 7] FIG. 7 is a cross-sectional view of a connecting portion between the drive-source support frame 2 and the swing-arm-support-shaft support member 100.
[FIG. 8] FIG. 8 is a cross-sectional view of the connecting portion between the drive-source support frame 2 and the swing-arm-support-shaft support member 100.
[FIG. 9] FIG. 9 is a cross-sectional view of a portion surrounded by the circle C shown in FIG. 1.
[FIG. 10] FIG. 10 is a view when a leaning vehicle 1g is viewed in the rightward direction r.
[FIG. 11] FIG. 11 is a view of a support member 21g, 22g as viewed in the rightward direction r.

### DESCRIPTION OF EMBODIMENTS

### (EMBODIMENT)

### [Overall configuration]

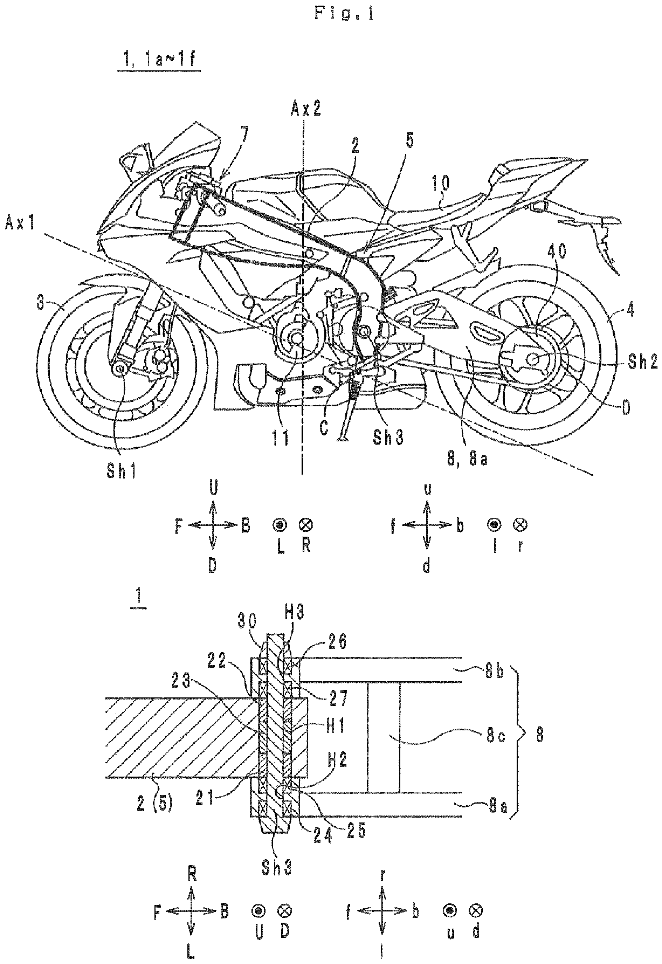

Hereinafter, the overall configuration of a leaning vehicle 1 according to an embodiment will be described with reference to drawings. In this embodiment, a two-wheeled leaning vehicle (hereinafter referred to as "leaning vehicle") which includes a leanable vehicle body frame, one front wheel, and one rear wheel is exemplified as one example of the leaning vehicle. FIG. 1 is a view of the leaning vehicle 1, 1a to 1f when the leaning vehicle 1, 1a to 1f is viewed in the rightward direction, and FIG. 1 is also a cross-sectional view of a portion surrounded by a circle C. FIG. 1 is a cross-sectional view of the leaning vehicle 1 taken along a plane which is parallel to a leaning-vehicle (1) front-back direction and a leaning-vehicle (1) left-right direction, and which includes the center axis of a swing-arm support shaft Sh3.

Hereinafter, a leaning-vehicle (1) frontward direction is referred to as a frontward direction "F". A leaning-vehicle (1) backward direction is referred to as a backward direction "B". A leaning-vehicle (1) leftward direction is referred to as a leftward direction "L". A leaning-vehicle (1) rightward direction is referred to as a rightward direction "R". A leaning-vehicle (1) upward direction is referred to as an upward direction "U". A leaning-vehicle (1) downward direction is referred to as a downward direction "D". A leaning-vehicle (1) front-back direction is referred to as a front-back direction "FB". A leaning-vehicle (1) left-right direction is referred to as a left-right direction "LR". A leaning-vehicle (1) up-down direction is referred to as an up-down direction "UD". The leaning-vehicle (1) frontward direction means a frontward direction when taking a rider who straddles the leaning vehicle 1 as a reference. The leaning-vehicle (1) backward direction means a backward direction when taking a rider who straddles the leaning vehicle 1 as a reference. The leaning-vehicle (1) leftward direction means a leftward direction when taking a rider who straddles the leaning vehicle 1 as a reference. The leaning-vehicle (1) rightward direction means a rightward direction when taking a rider who straddles the leaning vehicle 1 as a reference. The leaning-vehicle (1) upward direction means an upward direction when taking a rider who straddles the leaning vehicle 1 as a reference. The leaning-vehicle (1) downward direction means a downward direction when taking a rider who straddles the leaning vehicle 1 as a reference.

Further, in the leaning vehicle 1, a vehicle body 5 can lean in the leftward direction L or in the rightward direction R. In the case where the vehicle body 5 leans in the leftward direction L or in the rightward direction R, a vehicle-body (5) up-down direction and a vehicle-body (5) left-right direction do not match the leaning-vehicle (1) up-down direction UD and the leaning-vehicle (1) left-right direction LR respectively. However, the vehicle-body (5) up-down direction and the vehicle-body (5) left-right direction with the vehicle-body 5 being in an upright state match the leaning-vehicle (1) up-down direction UD and the leaning-vehicle (1) left-right direction LR respectively. Hereinafter, a vehicle-body (5) frontward direction is referred to as a frontward direction "f". A vehicle-body (5) backward direction is referred to as a backward direction "b". A vehicle-body (5) leftward direction is referred to as a leftward direction "I". A vehicle-body (5) rightward direction is referred to as a rightward direction "r". A vehicle-body (5) upward direction is referred to as an upward direction "u". A vehicle-body (5) downward direction is referred to as a downward direction "d". A vehicle-body (5) front-back direction is referred to as a front-back direction "fb". A vehicle body (5) left-right direction is referred to as a left-right direction "lr". A vehicle-body (5) up-down direction is referred to as an up-down direction "ud". Further, the term "the vehicle body 5 being in an upright state" means a state in which a front wheel is neither steering nor leaning with no rider riding on the leaning vehicle 1 and with no fuel being in the leaning vehicle 1.

In this specification, an axis or a member extending in the front-back direction does not necessarily refer to only an axis or a member that is parallel to the front-back direction. The axis or the member extending in the front-back direction refers to an axis or a member that leans within a range of ±45° with respect to the front-back direction. Similarly, an axis or a member extending in the up-down direction refers to an axis or a member that leans within a range of ±45° with respect to the up-down direction. An axis or a member extending in the left-right direction refers to an axis or a member that leans within a range of ±45° with respect to the left-right direction.

In this specification, a state in which a first member is supported on a second member includes a state in which the first member is mounted on the second member in a non-movable manner with respect to the second member (that is, the first member is fixed to the second member), and a state in which the first member is mounted on the second member in a movable manner with respect to the second member. Further, a state in which the first member is supported on the second member includes both a state in which the first member is directly mounted on the second member and a state in which the first member is mounted on the second member via a third member.

In this specification, the first member and the second member arranged in the front-back direction refer to the first member and the second member being in the following state. When the first member and the second member are viewed from the direction perpendicular to the front-back direction, both the first member and the second member are disposed on an arbitrary straight line indicating the front-back direction. In this specification, the first member and the second member arranged in the front-back direction as viewed from the up-down direction refer to the first member and the second member being in the following state. When the first member and the second member are viewed from the up-down direction, both the first member and the second member are disposed on an arbitrary straight line indicating the front-back direction. In this case, when the first member and the second member are viewed from the left-right direction which is different from the up-down direction, either one of the first member or the second member may not be disposed on the arbitrary straight line indicating the front-back direction. The first member and the second member may be in contact with each other. The first member and the second member may be separated from each other. The third member may be disposed between the first member and the second member. This definition is also applicable to other directions in addition to the front-back direction.

In this specification, a state in which the first member is disposed in front of the second member refers to the following state. At least a portion of the first member is disposed in a region where the second member passes when the second member performs parallel movement in the frontward direction. Accordingly, the first member may fall within the range where the second member passes when the second member performs parallel movement in the frontward direction, or the first member may protrude from the region where the second member passes when the second member performs parallel movement in the frontward direction. In this case, the first member and the second member are arranged in the front-back direction. This definition is also applicable to other directions in addition to the front-back direction.

In this specification, a state in which the first member is disposed further forward than the second member refers to the following state. The first member is disposed in front of a plane which passes through the front end of the second member and which is orthogonal to the front-back direction. In this case, the first member and the second member may be or may not be arranged in the front-back direction. This definition is also applicable to other directions in addition to the front-back direction.

In this specification, a state in which the first member is disposed in front of the second member as viewed in the left-right direction refers to the following state. As viewed in the left-right direction, the first member and the second member are arranged in the front-back direction, and the front end of the first member is disposed further forward than the front end of the second member. In this definition, however, the first member and the second member may not be arranged in the front-back direction three-dimensionally. This definition is also applicable to other directions in addition to the front-back direction.

In this specification, unless otherwise specified, respective portions of the first member are defined as follows. The front portion of the first member means the front half of the first member. The rear portion of the first member means the rear half of the first member. The left portion of the first member means the left half of the first member. The right portion of the first member means the right half of the first member. The upper portion of the first member means the upper half of the first member. The lower portion of the first member means the lower half of the first member. The upper end of the first member means the end of the first member in the upward direction. The lower end of the first member means the end of the first member in the downward direction. The front end of the first member means the end of the first member in the frontward direction. The rear end of the first member means the end of the first member in the backward direction. The right end of the first member means the end of the first member in the rightward direction. The left end of the first member means the end of the first member in the leftward direction. The upper end portion of the first member means the upper end and its vicinity of the first member. The lower end portion of the first member means the lower end and its vicinity of the first member. The front end portion of the first member means the front end and its vicinity of the first member. The rear end portion of the first member means the rear end and its vicinity of the first member. The right end portion of the first member means the right end and its vicinity of the first member. The left end portion of the first member means the left end and its vicinity of the first member. The first member means a member forming the leaning vehicle 1.

As shown in FIG. 1, the leaning vehicle 1 includes a steerable wheel 3, a drive wheel 4, the vehicle body 5, a steering mechanism 7, a swing arm 8, a seat 10, a steerable-wheel axle shaft Sh1, a drive-wheel axle shaft Sh2, and the swing-arm support shaft Sh3.

The vehicle body 5 leans in the leftward direction L when the leaning vehicle 1 turns left. The vehicle body 5 leans in the rightward direction R when the leaning vehicle 1 turns right. The vehicle body 5 includes a drive-source support frame 2 and a drive source 11.

The drive-source support frame 2 supports the steerable wheel 3, the drive wheel 4, the steering mechanism 7, the swing arm 8, the seat 10, the drive source 11, the steerable-wheel axle shaft Sh1, the drive-wheel axle shaft Sh2, and the swing-arm support shaft Sh3. The drive-source support frame 2 leans in the leftward direction L when the leaning vehicle 1 turns left. The drive-source support frame 2 leans in the rightward direction R when the leaning vehicle 1 turns right. In FIG. 1, a portion of the drive-source support frame 2 is covered by a cowl, thus being prevented from being visually recognized. Accordingly, to facilitate the understanding, the drive-source support frame 2 is indicated by a bold line in FIG. 1. The drive-source support frame 2 extends in the front-back direction fb. Further, the drive-source support frame 2 bends in the downward direction d from the rear end portion of the drive-source support frame 2.

The steering mechanism 7 is supported on the vehicle body 5. In this embodiment, the steering mechanism 7 is supported on the front end portion of the drive-source support frame 2. The steering mechanism 7 steers the steerable wheel 3 when operated by a rider. The steering mechanism 7 includes a handlebar, a steering shaft, and a front fork. The structures of the handlebar, the steering shaft, and the front fork are substantially equal to the structures of general handlebars, steering shafts and front forks and hence, the description of such structures is omitted.

The steerable-wheel axle shaft Sh1 is supported on the vehicle body 5. In this embodiment, the steerable-wheel axle shaft Sh1 is supported on the lower end portion of the front fork of the steering mechanism 7. The steerable-wheel axle shaft Sh1 extends in the left-right direction lr with the leaning vehicle 1 being in the upright state. The upright state means a state in which the steerable wheel 3 is not steering in the leftward direction L or the rightward direction R, and the drive-source support frame 2 is not leaning in the leftward direction L or the rightward direction R.

The steerable wheel 3 is the front wheel of the leaning vehicle 1. Accordingly, the steerable wheel 3 is disposed at the front portion of the leaning vehicle 1. The steerable wheel 3 is supported on the steerable-wheel axle shaft Sh1 such that the steerable wheel 3 is rotatable about the center axis of the steerable-wheel axle shaft Sh1. With such a configuration, the steerable wheel 3 is supported on the drive-source support frame 2 via the steering mechanism 7. In other words, the steerable wheel 3 is supported on the vehicle body 5. Further, a rider can steer the steerable wheel 3 by operating the handlebar of the steering mechanism 7.

The swing-arm support shaft Sh3 is supported on the vehicle body 5. In this embodiment, the swing-arm support shaft Sh3 is supported on the rear lower portion of the drive-source support frame 2. The swing-arm support shaft Sh3 extends in the left-right direction lr.

When viewed in the rightward direction r, the swing arm 8 extends in the backward direction b from the rear lower portion of the drive-source support frame 2. The front portion of the swing arm 8 (to be more precise, the front end portion of the swing arm 8) is supported on the swing-arm support shaft Sh3. With such a configuration, the swing arm 8 is swingable with respect to the vehicle body 5 (to be more precise, with respect to the drive-source support frame 2) about the center axis of the swing-ami support shaft Sh3. Accordingly, the rear portion of the swing arm 8 can move upward and downward with respect to the drive-source support frame 2.

The drive-wheel axle shaft Sh2 is supported on the rear portion of the swing arm 8 (to be more precise, on the rear end portion of the swing arm 8). The drive-wheel axle shaft Sh2 extends in the left-right direction lr.

The drive wheel 4 is the rear wheel of the leaning vehicle 1. Accordingly, the drive wheel 4 is disposed at the rear portion of the leaning vehicle 1. The drive wheel 4 is supported on the drive-wheel axle shaft Sh2 such that the drive wheel 4 is rotatable about the center axis of the drive-wheel axle shaft Sh2. With such a configuration, the drive wheel 4 is supported on the drive-source support frame 2 via the swing arm 8. The drive wheel 4 is rotated by a driving force generated by the drive source 11 described later.

The rider sits on the seat 10. The seat 10 is supported on the drive-source support frame 2.

The drive source 11 generates a driving force which causes the drive wheel 4 to rotate. The drive source 11 leans in the leftward direction L when the leaning vehicle 1 turns left. The drive source 11 leans in the rightward direction R when the leaning vehicle 1 turns right. The drive source 11 may be an engine, an electric motor or the like. The drive source 11 may also be a combination of the engine and the electric motor. The drive source 11 is supported on the drive-source support frame 2. More specifically, when viewed in the rightward direction r, the drive source 11 is disposed in front of and below the drive-source support frame 2, in the frontward direction f and the downward direction d. With such a configuration, the upper portion of the drive source 11 and the rear portion of the drive source 11 are fixed to the drive-source support frame 2. A driving force generated by the drive source 11 is transmitted to the drive wheel 4 via a transmission mechanism, such as a transmission. With such a configuration, the drive wheel 4 is rotated by a driving force generated by the drive source 11.

### [Supporting structure of swing arm]

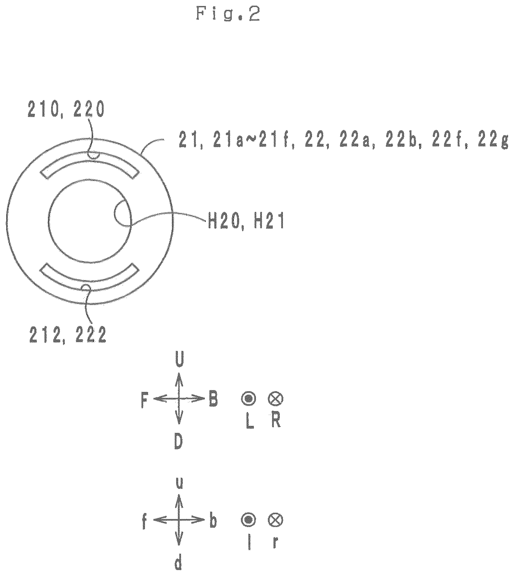

Next, the supporting structure of the swing arm 8 will be described with reference to drawings. FIG. 2 is a view of a support member 21, 21a to 21f, 22, 22a, 22b, 22f, 22g as viewed in the rightward direction r.

First, a roll axis Ax1 of the leaning vehicle 1 and a yaw axis Ax2 of the leaning vehicle 1 will be described with reference to FIG. 1. The roll axis Ax1 is a straight line which passes through a point where the drive wheel 4 comes into contact with a ground surface, and which is orthogonal to the steering shaft. The roll axis Ax1 is positioned at the center of the leaning vehicle 1 in the left-right direction LR. The yaw axis Ax2 is a straight line which passes through the center of gravity of the leaning vehicle 1, and which extends in the up-down direction UD.

As shown in FIG. 1, the swing arm 8 includes a swing-arm left portion 8a, a swing-arm right portion 8b, and a swing-arm connecting portion 8c. The swing-arm left portion 8a is disposed at a position further leftward in the leftward direction 1 than the center of the drive-source support frame 2 in the left-right direction lr. The swing-arm left portion 8a extends in the front-back direction fb at a position disposed to the left of the drive wheel 4 in the leftward direction 1. The swing-arm left portion 8a supports the left end portion of the drive-wheel axle shaft Sh2. Further, a through hole H2 penetrates the front end portion of the swing-arm left portion 8a in the left-right direction lr.

The swing-arm right portion 8b is disposed at a position further rightward in the rightward direction r than the center of the drive-source support frame 2 in the left-right direction lr. The swing-arm right portion 8b extends in the front-back direction fb at a position disposed to the right of the drive wheel 4 in the rightward direction r. The swing-arm right portion 8b supports the right end portion of the drive-wheel axle shaft Sh2. Further, a through hole H3 penetrates the front end portion of the swing-arm right portion 8b in the left-right direction lr.

The swing-arm connecting portion 8c is disposed in front of the drive wheel 4 in the frontward direction f. The swing-arm connecting portion 8c extends in the left-right direction lr. The swing-arm connecting portion 8c connects the swing-arm left portion 8a and the swing-arm right portion 8b with each other.

As shown in FIG. 1, the rear end portion of the drive-source support frame 2 is disposed at a position between the front end portion of the swing-arm left portion 8a and the front end portion of the swing-arm right portion 8b. Further, a through hole H1 penetrates the rear end portion of the drive-source support frame 2 in the left-right direction lr. The through holes H1 to H3 communicate with each other, thus forming one through hole.

As shown in FIG. 1, the leaning vehicle 1 includes the support members 21, 22, a collar 23, bearings 24 to 27, and a nut 30. The support member 21 has a cylindrical shape having a center axis extending in the left-right direction lr. Accordingly, a through hole H20 (see FIG. 2) penetrates the support member 21 in the left-right direction lr. The support member 21 is disposed at the left portion of the through hole H1. The outer peripheral surface of the support member 21 is brought into close contact with the inner peripheral surface of the through hole H1. The center axis of the support member 21 and the center axis of the through hole H1 are aligned with each other. The support member 22 has a cylindrical shape having a center axis extending in the left-right direction lr. Accordingly, a through hole H21 (see FIG. 2) penetrates the support member 22 in the left-right direction lr. The support member 22 is disposed at the right portion of the through hole H1. The outer peripheral surface of the support member 22 is brought into close contact with the inner peripheral surface of the through hole H1. The center axis of the support member 22 and the center axis of the through hole H1 are aligned with each other. The support members 21, 22 are made of an elastic material, such as rubber. Accordingly, the support members 21, 22 can be elastically deformed.

The collar 23 has a cylindrical shape having a center axis extending in the left-right direction lr. The collar 23 is provided in the through hole H1 at a position between the support member 21 and the support member 22. The collar 23 is a member provided for maintaining a fixed distance between the support member 21 and the support member 22 in the left-right direction lr. The collar 23 is made of metal, for example.

The bearing 24 is provided at the left portion of the through hole H2. The bearing 25 is provided at the right portion of the through hole H2. The bearing 26 is provided at the right portion of the through hole H3. The bearing 27 is provided at the left portion of the through hole H3.

The swing-arm support shaft Sh3 is a bolt. The swing-arm support shaft Sh3 is supported on the vehicle body 5. In this embodiment, the swing-arm support shaft Sh3 is supported on the drive-source support frame 2. To be more specific, the swing-arm support shaft Sh3 passes through the through holes H1 to H3 in a penetrating manner in the left-right direction lr. Accordingly, the swing-arm support shaft Sh3 penetrates the support members 21, 22, the collar 23, and the bearings 24 to 27 in the left-right direction lr. With such a configuration, the support members 21, 22 are provided between the swing-arm support shaft Sh3 and the vehicle body 5. In this embodiment, the support members 21, 22 are provided between the swing-arm support shaft Sh3 and the drive-source support frame 2. The outer peripheral surfaces of the support members 21, 22 are in contact with the vehicle body 5. In this embodiment, the outer peripheral surfaces of the support members 21, 22 are in contact with the drive-source support frame 2. The inner peripheral surfaces of the support members 21, 22 are in contact with the swing-arm support shaft Sh3.

The right end portion of the swing-arm support shaft Sh3 protrudes from the through hole H3 in the rightward direction r. The nut 30 is fixed to the right end portion of the swing-arm support shaft Sh3.

The amounts of deformation of the support members 21, 22 with a force in the up-down direction ud applied to the support members 21, 22 are different from the amounts of deformation of the support members 21, 22 with a force in the front-back direction fb applied to the support members 21, 22. The magnitude of the force in the up-down direction ud is equal to the magnitude of the force in the front-back direction fb. In this embodiment, the amounts of deformation of the support members 21, 22 with a force in the up-down direction ud applied to the support members 21, 22 are larger than the amounts of deformation of the support members 21, 22 with a force in the front-back direction fb applied to the support members 21, 22. In view of the above, through holes 210, 212 are formed in the support member 21 as shown in FIG. 2. The through hole 210 is formed above the through hole H20 of the support member 21 in the upward direction u when viewed in the rightward direction r. The through hole 212 is formed below the through hole H20 of the support member 21 in the downward direction d when viewed in the rightward direction r. The through holes 210, 212 have an arc shape when viewed in the rightward direction r. The through holes 210, 212 penetrate the support member 21 in the left-right direction lr. Through holes 220, 222 are also formed in the support member 22 as shown in FIG. 2. The through hole 220 is formed above the through hole H21 of the support member 22 in the upward direction u when viewed in the rightward direction r. The through hole 222 is formed below the through hole H21 of the support member 22 in the downward direction d when viewed in the rightward direction r. The through holes 220, 222 have an arc shape when viewed in the rightward direction r. The through holes 220, 222 penetrate the support member 22 in the left-right direction lr.

When the swing-arm support shaft Sh3 receives a force in the upward direction u, the support members 21, 22 are deformed by a relatively large amount such that the sizes of the through holes 210, 220 in the up-down direction ud reduce. In the same manner, when the swing-arm support shaft Sh3 receives a force in the downward direction d, the support members 21, 22 are deformed by a relatively large amount such that the sizes of the through holes 212, 222 in the up-down direction ud reduce. Accordingly, the swing-arm support shaft Sh3 can be displaced in the up-down direction ud by a relatively large amount.

On the other hand, when the swing-arm support shaft Sh3 receives a force in the frontward direction f, the support members 21, 22 are deformed by a relatively small amount. In the same manner, when the swing-arm support shaft Sh3 receives a force in the backward direction b, the support members 21, 22 are deformed by a relatively small amount. Accordingly, the swing-arm support shaft Sh3 can be displaced in the front-back direction fb by a relatively small amount.

In the leaning vehicle 1 which includes the support members 21, 22 having the above-mentioned configuration, the magnitude of moment of a force required for rotating the swing-arm support shaft Sh3 about the roll axis Ax1 by a unit angle with respect to the vehicle body 5 (drive-source support frame 2) is different from the magnitude of moment of a force required for rotating the swing-arm support shaft Sh3 about the yaw axis Ax2 by the unit angle with respect to the vehicle body 5 (drive-source support frame 2). In this embodiment, the magnitude of moment of the force required for rotating the swing-arm support shaft Sh3 about the roll axis Ax1 by the unit angle with respect to the vehicle body 5 (drive-source support frame 2) is smaller than the magnitude of moment of the force required for rotating the swing-arm support shaft Sh3 about the yaw axis Ax2 by the unit angle with respect to the vehicle body 5 (drive-source support frame 2). The unit angle refers to an angle which is determined in advance. The size of the unit angle is 1°, for example. However, the size of the unit angle is not limited to 1°. The detailed description will be made hereinafter.

Rotating the swing-arm support shaft Sh about the roll axis Ax1 with respect to the vehicle body 5 (drive-source support frame 2) means the following two actions ((a), (b)) in FIG. 2.
(a) The left end of the swing-arm support shaft Sh3 is displaced in the upward direction u, and the right end of the swing-arm support shaft Sh3 is displaced in the downward direction d.
(b) The left end of the swing-arm support shaft Sh3 is displaced in the downward direction d, and the right end of the swing-arm support shaft Sh3 is displaced in the upward direction u.

At this point of operation, the swing-arm support shaft Sh3 applies a force in the upward direction u or in the downward direction d to the support members 21, 22. Accordingly, the support members 21, 22 are deformed by a relatively large amount so that the swing-arm support shaft Sh3 rotates about the roll axis Ax1 by a relatively large amount.

On the other hand, rotating the swing-arm support shaft Sh3 about the yaw axis Ax2 with respect to the vehicle body 5 (drive-source support frame 2) means the following two actions ((c), (d)) in FIG. 2.
(c) The left end of the swing-arm support shaft Sh3 is displaced in the frontward direction f, and the right end of the swing-arm support shaft Sh3 is displaced in the backward direction b.
(d) The left end of the swing-arm support shaft Sh3 is displaced in the backward direction b, and the right end of the swing-arm support shaft Sh3 is displaced in the frontward direction f.

At this point of operation, the swing-arm support shaft Sh3 applies a force in the frontward direction f or in the backward direction b to the support members 21, 22. Accordingly, the support members 21, 22 are deformed by a relatively small amount so that the swing-arm support shaft Sh3 rotates about the yaw axis Ax2 by a relatively small amount.

As described above, the swing-arm support shaft Sh3 easily rotates about the roll axis Ax1, but does not easily rotate about the yaw axis Ax2. As a result, the magnitude of moment of a force required for rotating the swing-arm support shaft Sh3 about the roll axis Ax1 by the unit angle with respect to the vehicle body 5 (drive-source support frame 2) is smaller than the magnitude of moment of a force required for rotating the swing-arm support shaft Sh3 about the yaw axis Ax2 by the unit angle with respect to the vehicle body 5 (drive-source support frame 2).

### [Advantageous effect]

According to the leaning vehicle 1, it is possible to obtain advantageous effects equivalent to advantageous effects which can be obtained when appropriate deflection characteristics and torsional characteristics are given to the swing arm 8. To be more specific, in the leaning vehicle 1, the support members 21, 22 have the structure in which the magnitude of moment of a force required for rotating the swing-arm support shaft Sh3 about the roll axis Ax1 by the unit angle with respect to the vehicle body 5 (drive-source support frame 2) is different from the magnitude of moment of a force required for rotating the swing-arm support shaft Sh3 about the yaw axis Ax2 by the unit angle with respect to the vehicle body 5 (drive-source support frame 2). With such a configuration, the ease of rotation of the drive wheel 4 about the roll axis Ax1 is different from the ease of rotation of the drive wheel 4 about the yaw axis Ax2. Accordingly, the ease of rotation of the drive wheel 4 about the roll axis Ax1 and the ease of rotation of the drive wheel 4 about the yaw axis Ax2 can be arbitrarily set by modifying the design of the support members 21, 22. As a result, according to the leaning vehicle 1, it is possible to obtain advantageous effects equivalent to advantageous effects which can be obtained when appropriate deflection characteristics and torsional characteristics are given to the swing arm 8.

### (First modification)

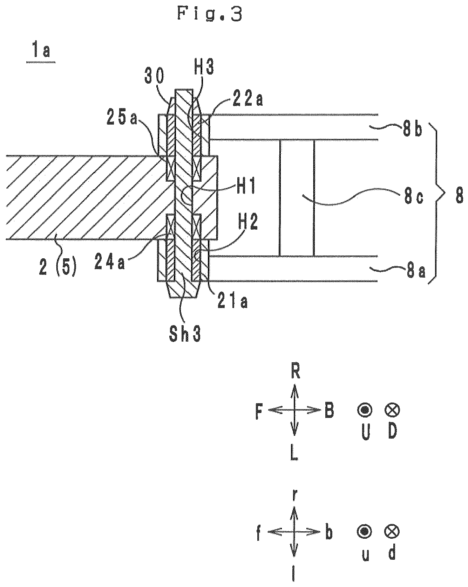

Hereinafter, the leaning vehicle 1a according to a first modification will be described with reference to drawings. FIG. 3 is a cross-sectional view of a portion surrounded by the circle C shown in FIG. 1. FIG. 3 is a cross-sectional view of the leaning vehicle 1a taken along a plane which is parallel to a leaning-vehicle (1a) front-back direction FB and a leaning-vehicle (1a) left-right direction LR, and which includes the center axis of the swing-arm support shaft Sh3.

The leaning vehicle 1a differs from the leaning vehicle 1 with respect to positions where support members 21a, 22a are provided. Hereinafter, the leaning vehicle 1a will be described by focusing on points which make the leaning vehicle 1a different from the leaning vehicle 1.

As shown in FIG. 3, the leaning vehicle 1a includes the support members 21a, 22a and bearings 24a, 25a. The support member 21a has a cylindrical shape having a center axis extending in the left-right direction lr. Accordingly, the through hole H20 (see FIG. 2) penetrates the support member 21a in the left-right direction lr. The support member 21a is disposed in the through hole H2. The outer peripheral surface of the support member 21a is brought into close contact with the inner peripheral surface of the through hole H2. The center axis of the support member 21a and the center axis of the through hole H2 are aligned with each other. The support member 22a has a cylindrical shape having a center axis extending in the left-right direction lr. Accordingly, the through hole H21 (see FIG. 2) penetrates the support member 22a in the left-right direction lr. The support member 22a is disposed in the through hole H3. The outer peripheral surface of the support member 22a is brought into close contact with the inner peripheral surface of the through hole H3. The center axis of the support member 22a and the center axis of the through hole H3 are aligned with each other. The support members 21a, 22a are made of an elastic material, such as rubber. Accordingly, the support members 21a, 22a can be elastically deformed.

The bearing 24a is provided at the left portion of the through hole H1. The bearing 25a is provided at the right portion of the through hole H1.

The swing-arm support shaft Sh3 is a bolt. The swing-arm support shaft Sh3 passes through the through holes H1 to H3 in a penetrating manner in the left-right direction lr. Accordingly, the swing-arm support shaft Sh3 penetrates the support members 21a, 22a and the bearings 24a, 25a in the left-right direction lr. With such a configuration, the support members 21a, 22a are provided between the swing-arm support shaft Sh3 and the swing arm 8. The outer peripheral surfaces of the support members 21a, 22a are in contact with the swing arm 8. The inner peripheral surfaces of the support members 21a, 22a are in contact with the swing-arm support shaft Sh3. The structure of the support member 21a, 22a is equal to the structure of the support member 21, 22 and hence, the description of such a structure is omitted.

The right end portion of the swing-arm support shaft Sh3 protrudes from the through hole H3 in the rightward direction r. The nut 30 is fixed to the right end portion of the swing-arm support shaft Sh3. Other structures of the leaning vehicle 1a are equal to the corresponding structures of the leaning vehicle 1 and hence, the description of such structures is omitted.

In the leaning vehicle 1a having the above-mentioned configuration, when the swing arm 8 receives a force in the upward direction u, the support members 21a, 22a are deformed by a relatively large amount such that the sizes of the through holes 210, 212 in the up-down direction ud reduce. In the same manner, when the swing arm 8 receives a force in the downward direction d, the support members 21a, 22a are deformed by a relatively large amount such that the sizes of the through holes 212, 222 in the up-down direction ud reduce. Accordingly, the swing arm 8 can be displaced in the up-down direction ud by a relatively large amount.

On the other hand, when the swing arm 8 receives a force in the frontward direction f, the support members 21a, 22a are deformed by a relatively small amount. In the same manner, when the swing arm 8 receives a force in the backward direction b, the support members 21a, 22a are deformed by a relatively small amount. Accordingly, the swing arm 8 can be displaced in the front-back direction fb by a relatively small amount.

In the leaning vehicle 1a which includes the support members 21a, 22a having the above-mentioned configuration, the magnitude of moment of a force required for rotating the swing arm 8 about the roll axis Ax1 by a unit angle with respect to the swing-arm support shaft Sh3 is different from the magnitude of moment of a force required for rotating the swing arm 8 about the yaw axis Ax2 by the unit angle with respect to the swing-arm support shaft Sh3. In this modification, the magnitude of moment of a force required for rotating the swing arm 8 about the roll axis Ax1 by the unit angle with respect to the swing-arm support shaft Sh3 is smaller than the magnitude of moment of a force required for rotating the swing arm 8 about the yaw axis Ax2 by the unit angle with respect to the swing-arm support shaft Sh3.

To be more specific, rotating the swing arm 8 about the roll axis Ax1 with respect to the swing-arm support shaft Sh3 means the following two actions ((e), (f)) in FIG. 3.
(e) The swing-arm left portion 8a is displaced in the upward direction u, and the swing-arm right portion 8b is displaced in the downward direction d.
(f) The swing-arm left portion 8a is displaced in the downward direction d, and the swing-arm right portion 8b is displaced in the upward direction u.

At this point of operation, the swing arm 8 applies a force in the upward direction u or in the downward direction d to the support members 21a, 22a. Accordingly, the support members 21a, 22a are deformed by a relatively large amount so that the swing arm 8 rotates about the roll axis Ax1 by a relatively large amount.

On the other hand, rotating the swing arm 8 about the yaw axis Ax2 with respect to the swing-arm support shaft Sh3 means the following two actions ((g), (h)) in FIG. 3.
(g) The swing-arm left portion 8a is displaced in the frontward direction f, and the swing-arm right portion 8b is displaced in the backward direction b.
(h) The swing-arm left portion 8a is displaced in the backward direction b, and the swing-arm right portion 8b is displaced in the frontward direction f.

At this point of operation, the swing arm 8 applies a force in the frontward direction f or in the backward direction b to the support members 21a, 22a. Accordingly, the support members 21a, 22a are deformed by a relatively small amount so that the swing arm 8 rotates about the yaw axis Ax2 by a relatively small amount.

As described above, the swing arm 8 easily rotates about the roll axis Ax1, but does not easily rotate about the yaw axis Ax2. As a result, the magnitude of moment of a force required for rotating the swing arm 8 about the roll axis Ax1 by the unit angle with respect to the swing-arm support shaft Sh3 is smaller than the magnitude of moment of a force required for rotating the swing arm 8 about the yaw axis Ax2 by the unit angle with respect to the swing-arm support shaft Sh3.

### [Advantageous effect]

According to the leaning vehicle 1a, it is possible to obtain advantageous effects equivalent to advantageous effects which can be obtained when appropriate deflection characteristics and torsional characteristics are given to the swing arm 8. To be more specific, in the leaning vehicle 1a, the support members 21a, 22a have the structure in which the magnitude of moment of a force required for rotating the swing arm 8 about the roll axis Ax1 by the unit angle with respect to the swing-arm support shaft Sh3 is different from the magnitude of moment of a force required for rotating the swing arm 8 about the yaw axis Ax2 by the unit angle with respect to the swing-arm support shaft Sh3. With such a configuration, the ease of rotation of the drive wheel 4 about the roll axis Ax1 is different from the ease of rotation of the drive wheel 4 about the yaw axis Ax2. Accordingly, the ease of rotation of the drive wheel 4 about the roll axis Ax1 and the ease of rotation of the drive wheel 4 about the yaw axis Ax2 can be arbitrarily set by modifying the design of the support members 21a, 22a. As a result, according to the leaning vehicle 1a, it is possible to obtain advantageous effects equivalent to advantageous effects which can be obtained when appropriate deflection characteristics and torsional characteristics are given to the swing arm 8.

### (Second modification)

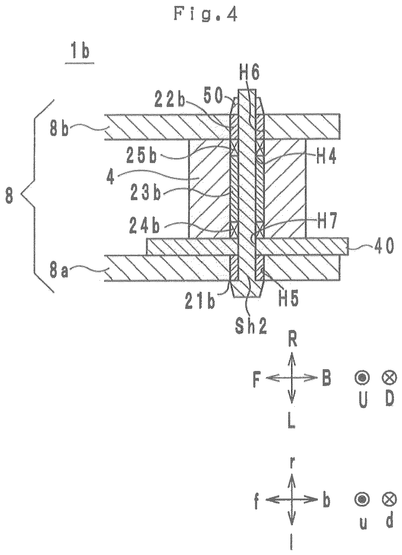

Hereinafter, the leaning vehicle 1b according to a second modification will be described with reference to drawings. FIG. 4 is a cross-sectional view of a portion surrounded by a circle D shown in FIG. 1. FIG. 4 is a cross-sectional view of the leaning vehicle 1b taken along a plane which is parallel to a leaning-vehicle (1b) front-back direction FB and a leaning-vehicle (1b) left-right direction LR, and which includes the center axis of the drive-wheel axle shaft Sh2.

The leaning vehicle 1b differs from the leaning vehicle 1 with respect to positions where the support members 21b, 22b are provided. Hereinafter, the leaning vehicle 1b will be described by focusing on points which make the leaning vehicle 1b different from the leaning vehicle 1.

As shown in FIG. 4, a through hole H5 penetrates the rear end portion of the swing-arm left portion 8a in the left-right direction 1r. A through hole H6 penetrates the rear end portion of the swing-arm right portion 8b in the left-right direction lr. A through hole H4 penetrates the center of the drive wheel 4 in the left-right direction lr.

The leaning vehicle 1b includes a sprocket 40. The sprocket 40 is disposed to the left of the drive wheel 4 in the leftward direction 1. The sprocket 40 is fixed to the drive wheel 4. With such a configuration, the sprocket 40 can rotate about the center axis of the drive-wheel axle shaft Sh2 together with the drive wheel 4. The sprocket 40 is rotated by a driving force generated by the drive source 11 (see FIG. 1), thus rotating the drive wheel 4. A through hole H7 penetrates the center of the sprocket 40 in the left-right direction. The through holes 114 to H7 communicate with each other, thus forming one through hole.

The leaning vehicle 1b includes the support members 21b, 22b, a collar 23 b, bearings 24b, 25b, and a nut 50. The support member 21b has a cylindrical shape having a center axis extending in the left-right direction lr. Accordingly, the through hole H20 (see FIG. 2) penetrates the support member 21b in the left-right direction lr. The support member 21b is disposed in the through hole 115. The outer peripheral surface of the support member 21b is brought into close contact with the inner peripheral surface of the through hole H5. The center axis of the support member 21b and the center axis of the through hole H5 are aligned with each other. The support member 22b has a cylindrical shape having a center axis extending in the left-right direction lr. Accordingly, the through hole H21 (see FIG. 2) penetrates the support member 22b in the left-right direction lr. The support member 22b is disposed in the through hole H6. The outer peripheral surface of the support member 22b is brought into close contact with the inner peripheral surface of the through hole H6. The center axis of the support member 22b and the center axis of the through hole H6 are aligned with each other. The support members 21b, 22b are made of an elastic material, such as rubber. Accordingly, the support members 21b, 22b can be elastically deformed.

The bearing 24b is provided at the left portion of the through hole H4. The bearing 25b is provided at the right portion of the through hole H4.

The collar 23b has a cylindrical shape having a center axis extending in the left-right direction lr. The collar 23b is provided in the through hole H4 at a position between the bearing 24b and the bearing 25b. The collar 23b is a member provided for maintaining a fixed distance between the bearing 24b and the bearing 25b in the left-right direction lr. The collar 23b is made of metal, for example.

The drive-wheel axle shaft Sh2 is a bolt. The drive-wheel axle shaft Sh2 passes through the through holes H4 to H7 in a penetrating manner in the left-right direction lr. Accordingly, the drive-wheel axle shaft Sh2 penetrates the support members 21b, 22b, the collar 23b and the bearings 24b, 25b in the left-right direction lr. With such a configuration, the support members 21b, 22b are provided between the drive-wheel axle shaft Sh2 and the swing arm 8. The outer peripheral surfaces of the support members 21b, 22b are in contact with the swing arm 8. The inner peripheral surfaces of the support members 21b, 22b are in contact with the drive-wheel axle shaft Sh2. The structure of the support member 21b, 22b is equal to the structure of the support member 21, 22 and hence, the description of such a structure is omitted.

The right end portion of the drive-wheel axle shaft Sh2 protrudes from the through hole H6 in the rightward direction r. The nut 50 is fixed to the right end portion of the drive-wheel axle shaft Sh2. Other structures of the leaning vehicle 1b are equal to the corresponding structures of the leaning vehicle 1 and hence, the description of such structures is omitted.

In the leaning vehicle 1b having the above-mentioned configuration, when the drive-wheel axle shaft Sh2 receives a force in the upward direction u, the support members 21b, 22b are deformed by a relatively large amount such that the sizes of the through holes 210, 212 in the up-down direction ud reduce. In the same manner, when the drive-wheel axle shaft Sh2 receives a force in the downward direction d, the support members 21b, 22b are deformed by a relatively large amount such that the sizes of the through holes 212, 222 in the up-down direction ud reduce. Accordingly, the drive-wheel axle shaft Sh2 can be displaced in the up-down direction ud by a relatively large amount.

On the other hand, when the drive-wheel axle shaft Sh2 receives a force in the frontward direction f, the support members 21b, 22b are deformed by a relatively small amount. In the same manner, when the drive-wheel axle shaft Sh2 receives a force in the backward direction b, the support members 21b, 22b are deformed by a relatively small amount. Accordingly, the drive-wheel axle shaft Sh2 can be displaced in the front-back direction fb by a relatively small amount.

In the leaning vehicle 1b which includes the support members 21b, 22b having the above-mentioned configuration, the magnitude of moment of a force required for rotating the drive-wheel axle shaft Sh2 about the roll axis Ax1 by the unit angle with respect to the swing arm 8 is different from the magnitude of moment of a force required for rotating the drive-wheel axle shaft Sh2 about the yaw axis Ax2 by the unit angle with respect to the swing arm 8. In this modification, the magnitude of moment of a force required for rotating the drive-wheel axle shaft Sh2 about the roll axis Ax1 by the unit angle with respect to the swing arm 8 is smaller than the magnitude of moment of a force required for rotating the drive-wheel axle shaft Sh2 about the yaw axis Ax2 by the unit angle with respect to the swing arm 8.

To be more specific, rotating the drive-wheel axle shaft Sh2 about the roll axis Ax1 with respect to the swing arm 8 means the following two actions ((i), (j)) in FIG. 4.
(i) The left end of the drive-wheel axle shaft Sh2 is displaced in the upward direction u, and the right end of the drive-wheel axle shaft Sh2 is displaced in the downward direction d.
(j) The left end of the drive-wheel axle shaft Sh2 is displaced in the downward direction d, and the right end of the drive-wheel axle shaft Sh2 is displaced in the upward direction u.

At this point of operation, the drive-wheel axle shaft Sh2 applies a force in the upward direction u or in the downward direction d to the support members 21b, 22b. Accordingly, the support members 21b, 22b are deformed by a relatively large amount so that the drive-wheel axle shaft Sh2 rotates about the roll axis Ax1 by a relatively large amount.

On the other hand, rotating the drive-wheel axle shaft Sh2 about the yaw axis Ax2 with respect to the swing arm 8 means the following two actions ((k), (1)) in FIG. 4.
(k) The left end of the drive-wheel axle shaft Sh2 is displaced in the frontward direction f, and the right end of the drive-wheel axle shaft Sh2 is displaced in the backward direction b.
(1) The left end of the drive-wheel axle shaft Sh2 is displaced in the backward direction b, and the right end of the drive-wheel axle shaft Sh2 is displaced in the frontward direction f.

At this point of operation, the drive-wheel axle shaft Sh2 applies a force in the frontward direction f or in the backward direction b to the support members 21b, 22b. Accordingly, the support members 21b, 22b are deformed by a relatively small amount so that the drive-wheel axle shaft Sh2 rotates about the yaw axis Ax2 by a relatively small amount.

As described above, the drive-wheel axle shaft Sh2 easily rotates about the roll axis Ax1, but does not easily rotate about the yaw axis Ax2. As a result, the magnitude of moment of a force required for rotating the drive-wheel axle shaft Sh2 about the roll axis Ax1 by the unit angle with respect to the swing arm 8 is smaller than the magnitude of moment of a force required for rotating the drive-wheel axle shaft Sh2 about the yaw axis Ax2 by the unit angle with respect to the swing arm 8.

### [Advantageous effect]

According to the leaning vehicle 1b, it is possible to obtain advantageous effects equivalent to advantageous effects which can be obtained when appropriate deflection characteristics and torsional characteristics are given to the swing arm 8. To be more specific, in the leaning vehicle 1b, the support members 21 b, 22b have the structure in which the magnitude of moment of a force required for rotating the drive-wheel axle shaft Sh2 about the roll axis Ax1 by the unit angle with respect to the swing arm 8 is different from the magnitude of moment of a force required for rotating the drive-wheel axle shaft Sh2 about the yaw axis Ax2 by the unit angle with respect to the swing arm 8. With such a configuration, the ease of rotation of the drive wheel 4 about the roll axis Ax1 is different from the ease of rotation of the drive wheel 4 about the yaw axis Ax2. Accordingly, the ease of rotation of the drive wheel 4 about the roll axis Ax1 and the ease of rotation of the drive wheel 4 about the yaw axis Ax2 can be arbitrarily set by modifying the design of the support members 21b, 22b. As a result, according to the leaning vehicle 1b, it is possible to obtain advantageous effects equivalent to advantageous effects which can be obtained when appropriate deflection characteristics and torsional characteristics are given to the swing arm 8.

### (Third modification)

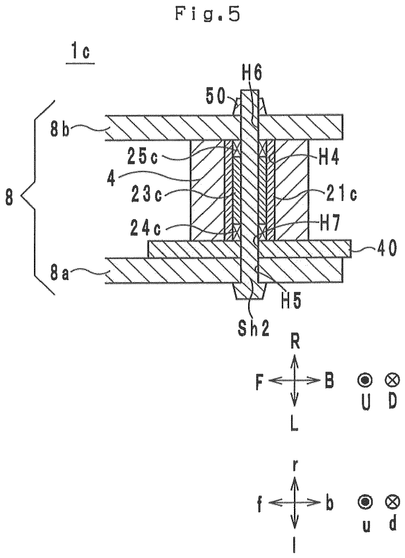

Hereinafter, the leaning vehicle 1c according to a third modification will be described with reference to drawings. FIG. 5 is a cross-sectional view of a portion surrounded by the circle D shown in FIG. 1. FIG. 5 is a cross-sectional view of the leaning vehicle 1c taken along a plane which is parallel to a leaning-vehicle (1c) front-back direction FB and a leaning-vehicle (1c) left-right direction LR, and which includes the center axis of the drive-wheel axle shaft Sh2.

The leaning vehicle 1c differs from the leaning vehicle 1b with respect to a position where a support member 21c is provided. Hereinafter, the leaning vehicle 1c will be described by focusing on points which make the leaning vehicle 1c different from the leaning vehicle 1b.

As shown in FIG. 5, the leaning vehicle 1c includes the support member 21c, a collar 23c, bearings 24c, 25c, and a nut 50. The support member 21c has a cylindrical shape having a center axis extending in the left-right direction lr. Accordingly, the through hole H20 (see FIG. 2) penetrates the support member 21c in the left-right direction lr. The support member 21c is disposed in the through hole H4. The outer peripheral surface of the support member 21c is brought into close contact with the inner peripheral surface of the through hole H4. The center axis of the support member 21c and the center axis of the through hole H4 are aligned with each other. The support member 21c is made of an elastic material, such as rubber. Accordingly, the support member 21c can be elastically deformed.

The bearing 24c is provided at the left portion of the through hole H4. The bearing 24c is disposed in the support member 21c. Accordingly, the outer peripheral surface of the bearing 24c is brought into close contact with the inner peripheral surface of the support member 21c. The center axis of the bearing 24c and the center axis of the support member 21c are aligned with each other.

The bearing 25c is provided at the right portion of the through hole H4. The bearing 25c is disposed in the support member 21c. Accordingly, the outer peripheral surface of the bearing 25c is brought into close contact with the inner peripheral surface of the support member 21c. The center axis of the bearing 25c and the center axis of the support member 21c are aligned with each other.

The collar 23c has a cylindrical shape having a center axis extending in the left-right direction lr. The collar 23c is provided in the through hole H4 at a position between the bearing 24c and the bearing 25c. The collar 23c is a member provided for maintaining a fixed distance between the bearing 24c and the bearing 25c in the left-right direction 1r. The collar 23c is made of metal, for example.

The drive-wheel axle shaft Sh2 is a bolt. The drive-wheel axle shaft Sh2 passes through the through holes H4 to H7 in a penetrating manner in the left-right direction lr. Accordingly, the drive-wheel axle shaft Sh2 penetrates the support member 21c, the collar 23c and the bearings 24c, 25c in the left-right direction lr. With such a configuration, the support member 21c is provided between the drive-wheel axle shaft Sh2 and the drive wheel 4. The outer peripheral surface of the support member 21c is in contact with the drive wheel 4. The inner peripheral surface of the support member 21c is in contact with the collar 23c and the bearings 24c, 25c. The structure of the support member 21c is equal to the structure of the support member 21b and hence, the description of such a structure is omitted.

The right end portion of the drive-wheel axle shaft Sh2 protrudes from the through hole H6 in the rightward direction r. The nut 50 is fixed to the right end portion of the drive-wheel axle shaft Sh2. Other structures of the leaning vehicle 1c are equal to the corresponding structures of the leaning vehicle 1b and hence, the description of such structures is omitted.

In the leaning vehicle 1c having the above-mentioned configuration, when the drive wheel 4 receives a force in the upward direction u, the support member 21c is deformed by a relatively large amount such that the size of the through hole 210 in the up-down direction ud reduces. In the same manner, when the drive wheel 4 receives a force in the downward direction d, the support member 21c is deformed by a relatively large amount such that the size of the through hole 212 in the up-down direction ud reduces. Accordingly, the drive wheel 4 can be displaced in the up-down direction ud by a relatively large amount.

On the other hand, when the drive wheel 4 receives a force in the frontward direction f, the support member 21c is deformed by a relatively small amount. In the same manner, when the drive wheel 4 receives a force in the backward direction b, the support member 21c is deformed by a relatively small amount. Accordingly, the drive wheel 4 can be displaced in the front-back direction fb by a relatively small amount.

In the leaning vehicle 1c which includes the support member 21c having the above-mentioned configuration, the magnitude of moment of a force required for rotating the drive wheel 4 about the roll axis Ax1 by the unit angle with respect to the drive-wheel axle shaft Sh2 is different from the magnitude of moment of a force required for rotating the drive wheel 4 about the yaw axis Ax2 by the unit angle with respect to the drive-wheel axle shaft Sh2. In this modification, the magnitude of moment of a force required for rotating the drive wheel 4 about the roll axis Ax1 by the unit angle with respect to the drive-wheel axle shaft Sh2 is smaller than the magnitude of moment of a force required for rotating the drive wheel 4 about the yaw axis Ax2 by the unit angle with respect to the drive-wheel axle shaft Sh2.

To be more specific, rotating the drive wheel 4 about the roll axis Ax1 with respect to the drive-wheel axle shaft Sh2 means the following two actions ((m), (n)) in FIG. 5.
(m) The left end of the drive wheel 4 is displaced in the upward direction u, and the right end of the drive wheel 4 is displaced in the downward direction d.
(n) The left end of the drive wheel 4 is displaced in the downward direction d, and the right end of the drive wheel 4 is displaced in the upward direction u.

At this point of operation, the drive wheel 4 applies a force in the upward direction u or in the downward direction d to the support member 21c. Accordingly, the support member 21c is deformed by a relatively large amount so that the drive wheel 4 rotates about the roll axis Ax1 by a relatively large amount.

On the other hand, rotating the drive wheel 4 about the yaw axis Ax2 with respect to the drive-wheel axle shaft Sh2 means the following two actions ((o), (p)) in FIG. 5.
(o) The left end of the drive wheel 4 is displaced in the frontward direction f, and the right end of the drive wheel 4 is displaced in the backward direction b.
(p) The left end of the drive wheel 4 is displaced in the backward direction b, and the right end of the drive wheel 4 is displaced in the frontward direction f.

At this point of operation, the drive wheel 4 applies a force in the frontward direction f or in the backward direction b to the support member 21c. Accordingly, the support member 21c is deformed by a relatively small amount so that the drive wheel 4 rotates about the yaw axis Ax2 by a relatively small amount.

As described above, the drive wheel 4 easily rotates about the roll axis Ax1, but does not easily rotate about the yaw axis Ax2. As a result, the magnitude of moment of a force required for rotating the drive wheel 4 about the roll axis Ax1 by the unit angle with respect to the drive-wheel axle shaft Sh2 is smaller than the magnitude of moment of a force required for rotating the drive wheel 4 about the yaw axis Ax2 by the unit angle with respect to the drive-wheel axle shaft Sh2.

### [Advantageous effect]

According to the leaning vehicle 1c, it is possible to obtain advantageous effects equivalent to advantageous effects which can be obtained when appropriate deflection characteristics and torsional characteristics are given to the swing arm 8. To be more specific, in the leaning vehicle 1c, the support member 21c has the structure in which the magnitude of moment of a force required for rotating the drive wheel 4 about the roll axis Ax1 by the unit angle with respect to the drive-wheel axle shaft Sh2 is different from the magnitude of moment of a force required for rotating the drive wheel 4 about the yaw axis Ax2 by the unit angle with respect to the drive-wheel axle shaft Sh2. With such a configuration, the ease of rotation of the drive wheel 4 about the roll axis Ax1 is different from the ease of rotation of the drive wheel 4 about the yaw axis Ax2. Accordingly, the ease of rotation of the drive wheel 4 about the roll axis Ax1 and the ease of rotation of the drive wheel 4 about the yaw axis Ax2 can be arbitrarily set by modifying the design of the support member 21c. As a result, according to the leaning vehicle 1c, it is possible to obtain advantageous effects equivalent to advantageous effects which can be obtained when appropriate deflection characteristics and torsional characteristics are given to the swing arm 8.

### (Fourth modification)

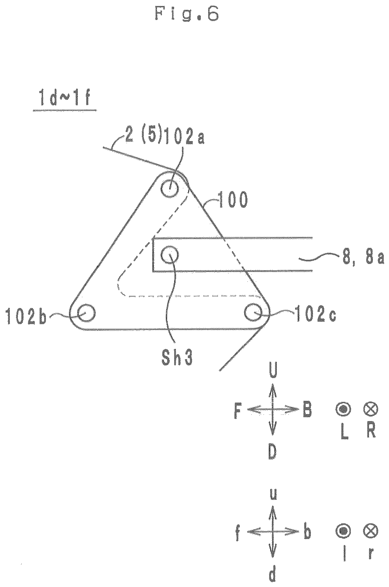

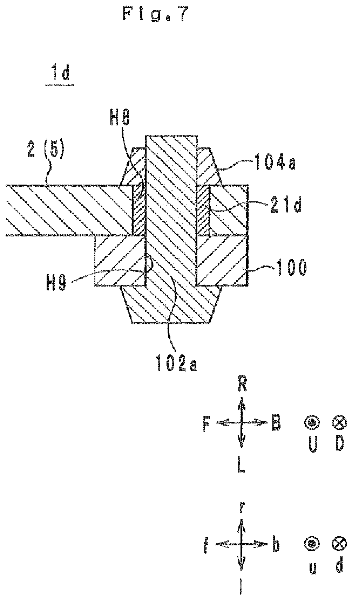

Hereinafter, the leaning vehicle 1d according to a fourth modification will be described with reference to drawings. FIG. 6 is an enlarged view of a connecting portion between the drive-source support frame 2 of the leaning vehicles 1d to 1f, a swing-arm-support-shaft support member 100, and the swing arm 8. FIG. 6 is a view when the leaning vehicle 1d is viewed in the rightward direction r. FIG. 7 is a cross-sectional view of a connecting portion between the drive-source support frame 2 and the swing-arm-support-shaft support member 100. FIG. 7 is a cross-sectional view of the leaning vehicle 1d taken along a plane which is parallel to a leaning-vehicle (1d) front-back direction FB and a leaning-vehicle (1d) left-right direction LR, and which includes the center axis of a mounting member 102a.

The leaning vehicle 1d differs from the leaning vehicle 1 with respect to the supporting structure of the swing arm 8. Hereinafter, the leaning vehicle 1d will be described by focusing on points which make the leaning vehicle 1d different from the leaning vehicle 1.

As shown in FIG. 6, the leaning vehicle 1d further includes the swing-arm-support-shaft support member 100 and the mounting members 102a to 102c. The swing-arm-support-shaft support member 100 is supported on the drive-source support frame 2 (vehicle body 5), and supports the swing-arm support shaft Sh3. The swing-arm-support-shaft support member 100 is a plate member having a triangular shape. The swing-arm-support-shaft support member 100 is disposed to the left of the drive-source support frame 2 (vehicle body 5) in the leftward direction 1. The mounting members 102a to 102c cause the swing-arm-support-shaft support member 100 to be mounted on the drive-source support frame 2 (vehicle body 5). Each of the mounting members 102a to 102c is disposed in the vicinity of the vertex of the swing-arm-support-shaft support member 100 having a triangular shape.

The front end portion of the swing-arm left portion 8a is supported on the swing-arm-support-shaft support member 100 via the swing-arm support shaft Sh3. The swing-arm support shaft Sh3 passes through the through hole H2 formed at the front end portion of the swing-arm left portion 8a, (see FIG. 1) and a through hole formed in the swing-arm-support-shaft support member 100 in a penetrating manner in the left-right direction lr. With such a configuration, the swing-arm left portion 8a can rotate about the center axis of the swing-arm support shaft Sh3. The supporting structure of the swing-arm right portion 8b on the drive-source support frame 2 (vehicle body 5) is equal to the supporting structure of the swing-arm left portion 8a on the drive-source support frame 2 (vehicle body 5) and hence, the description of such a structure will be omitted.

Next, the supporting structure of the swing-arm-support-shaft support member 100 on the drive-source support frame 2 (vehicle body 5) will be described in detail with reference to FIG. 7. A through hole H8 penetrates the drive-source support frame 2 in the left-right direction lr. A through hole H9 penetrates the swing-arm-support-shaft support member 100 in the left-right direction lr. The through holes H8, H9 communicate with each other, thus forming one through hole.

As shown in FIG. 7, the leaning vehicle 1d includes a support member 21d and a nut 104a. The support member 21d has a cylindrical shape having a center axis extending in the left-right direction lr. Accordingly, the through hole H20 (see FIG. 2) penetrates the support member 21d in the left-right direction lr. The support member 21d is disposed in the through hole H8. The outer peripheral surface of the support member 21d is brought into close contact with the inner peripheral surface of the through hole H8. The center axis of the support member 21d and the center axis of the through hole H8 are aligned with each other. The support member 21d is made of an elastic material, such as rubber. Accordingly, the support member 21d can be elastically deformed.

The mounting member 102a is a bolt. The mounting member 102a passes through the through holes H8, H9 in a penetrating manner in the left-right direction lr. Accordingly, the mounting member 102a penetrates the support member 21d in the left-right direction lr. With such a configuration, the support member 21d is provided between the mounting member 102a and the drive-source support frame 2 (vehicle body 5). The mounting member 102a is supported on the swing-arm-support-shaft support member 100. The swing-arm-support-shaft support member 100 supports the swing-arm support shaft Sh3. Accordingly, the support member 21d is provided between the drive-source support frame 2 (vehicle body 5) and the swing-arm support shaft Sh3. The inner peripheral surface of the support member 21d is in contact with the mounting member 102a. The outer peripheral surface of the support member 21d is in contact with the drive-source support frame 2 (vehicle body 5). The structure of the support member 21d is equal to the structure of the support member 21 and hence, the description of such a structure is omitted.

The right end portion of the mounting member 102a protrudes from the through hole H8 in the rightward direction r. The nut 104a is fixed to the right end portion of the mounting member 102a. With such a configuration, the swing-arm-support-shaft support member 100 is mounted on the drive-source support frame 2 (vehicle body 5) by the support member 21d, the mounting member 102a and the nut 104a. The swing-arm-support-shaft support member 100 is mounted on the drive-source support frame 2 (vehicle body 5) by a support member (not shown in the drawing), mounting members 102b, 102c and a nut (not shown in the drawing). The structures of the support member, the mounting members 102b, 102c and the nut are equal to the structures of the support member 21d, the mounting member 102a and the nut 104a and hence, the description of such structures is omitted. Further, other structures of the leaning vehicle 1d are equal to the corresponding structures of the leaning vehicle 1 and hence, the description of such structures is omitted.

In the leaning vehicle 1d having the above-mentioned configuration, when the swing-arm support shaft Sh3 receives a force in the upward direction u, the swing-arm-support-shaft support member 100 and the mounting member 102a receive a force in the upward direction u. Accordingly, the support member 21d is deformed by a relatively large amount such that the size of the through hole 210 of the support member 21d in the up-down direction ud reduces. A phenomenon similar to a phenomenon in the support member 21d occurs also in a support member of the mounting member 102b, 102c. In the same manner, when the swing-arm support shaft Sh3 receives a force in the downward direction d, the swing-arm-support-shaft support member 100 and the mounting member 102a receive a force in the downward direction d. Accordingly, the support member 21d is deformed by a relatively large amount such that the size of the through hole 212 of the support member 21d in the up-down direction ud reduces. A phenomenon similar to a phenomenon in the support member 21d occurs also in a support member of the mounting member 102b, 102c. Accordingly, the swing-arm support shaft Sh3 can be displaced in the up-down direction ud by a relatively large amount.

On the other hand, when the swing-arm support shaft Sh3 receives a force in the frontward direction f, the swing-arm-support-shaft support member 100 and the mounting member 102a receive a force in the frontward direction f. Accordingly, the support member 21d is deformed by a relatively small amount. A phenomenon similar to a phenomenon in the support member 21d occurs also in a support member of the mounting member 102b, 102c. In the same manner, when the swing-arm support shaft Sh3 receives a force in the backward direction b, the swing-arm-support-shaft support member 100 and the mounting member 102a receive a force in the backward direction b. Accordingly, the support member 21d is deformed by a relatively small amount. A phenomenon similar to a phenomenon in the support member 21d occurs also in a support member of the mounting member 102b, 102c. Therefore, the swing-arm support shaft Sh3 can be displaced in the front-back direction fb by a relatively small amount.

In the leaning vehicle 1d which includes the support member 21d having the above-mentioned configuration, in the same manner as the support member 21 of the leaning vehicle 1, the magnitude of moment of a force required for rotating the swing-arm support shaft Sh3 about the roll axis Ax1 by a unit angle with respect to the drive-source support frame 2 is different from the magnitude of moment of a force required for rotating the swing-arm support shaft Sh3 about the yaw axis Ax2 by the unit angle with respect to the drive-source support frame 2. In this modification, the magnitude of moment of a force required for rotating the swing-arm support shaft Sh3 about the roll axis Ax1 by the unit angle with respect to the vehicle body 5 (drive-source support frame 2) is smaller than the magnitude of moment of a force required for rotating the swing-arm support shaft Sh3 about the yaw axis Ax2 by the unit angle with respect to the vehicle body 5 (drive-source support frame 2). The description of the magnitude relationship of the moment in the leaning vehicle 1d is equal to the description of the magnitude relationship of the moment in the leaning vehicle 1 and hence, the repeated description will be omitted.

### [Advantageous effect]

According to the leaning vehicle 1d, for the same reason as the leaning vehicle 1, it is possible to obtain advantageous effects equivalent to advantageous effects which can be obtained when appropriate deflection characteristics and torsional characteristics are given to the swing arm 8.

### (Fifth modification)

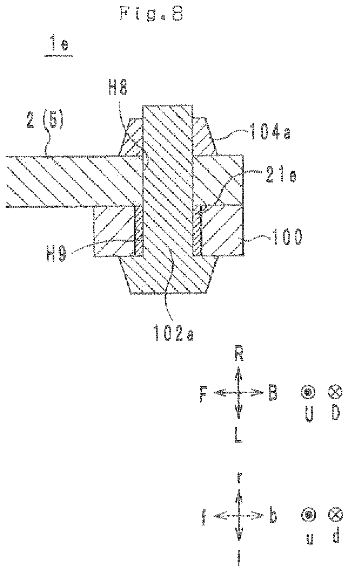

Hereinafter, the leaning vehicle 1e according to a fifth modification will be described with reference to drawings. FIG. 8 is a cross-sectional view of a connecting portion between the drive-source support frame 2 and the swing-arm-support-shaft support member 100. FIG. 8 is a cross-sectional view of the leaning vehicle 1e taken along a plane which is parallel to a leaning-vehicle (1e) front-back direction FB and a leaning-vehicle (1e) left-right direction LR, and which includes the center axis of the mounting member 102a.

The leaning vehicle 1e differs from the leaning vehicle 1d with respect to a position where a support member 21e is provided. In the leaning vehicle 1d, the support member 21d is provided between the mounting member 102a and the vehicle body 5 (drive-source support frame 2) as shown in FIG. 7. On the other hand, the support member 21e is provided between the mounting member 102a and the swing-arm-support-shaft support member 100 as shown in FIG. 8. The mounting member 102a is supported on the vehicle body 5 (drive-source support frame 2). The swing-arm-support-shaft support member 100 supports the swing-arm support shaft Sh3. Accordingly, the support member 21e is provided between the vehicle body 5 (drive-source support frame 2) and the swing-arm support shaft Sh3. The structure of the support member 21e is equal to the structure of the support member 21, 21d and hence, the description of such a structure is omitted. Further, other structures of the leaning vehicle 1e are equal to the corresponding structures of the leaning vehicle 1, 1d and hence, the description of such structures is omitted.

In the leaning vehicle 1e having the above-mentioned configuration, when the swing-arm support shaft Sh3 receives a force in the upward direction u, the swing-arm-support-shaft support member 100 receives a force in the upward direction u. Accordingly, the support member 21e is deformed by a relatively large amount such that the size of the through hole 210 of the support member 21e in the up-down direction ud reduces. In the same manner, when the swing-arm support shaft Sh3 receives a force in the downward direction d, the swing-arm-support-shaft support member 100 receives a force in the downward direction d. Accordingly, the support member 21e is deformed by a relatively large amount such that the size of the through hole 212 of the support member 21e in the up-down direction ud reduces. Accordingly, the swing-arm support shaft Sh3 can be displaced in the up-down direction ud by a relatively large amount.

On the other hand, when the swing-arm support shaft Sh3 receives a force in the frontward direction f, the swing-arm-support-shaft support member 100 receives a force in the frontward direction f. Accordingly, the support member 21e is deformed by a relatively small amount. In the same manner, when the swing-arm support shaft Sh3 receives a force in the backward direction b, the swing-arm-support-shaft support member 100 receives a force in the backward direction b. Accordingly, the support member 21d is deformed by a relatively small amount. Therefore, the swing-arm support shaft Sh3 can be displaced in the front-back direction fb by a relatively small amount.

In the leaning vehicle 1e which includes the support member 21e having the above-mentioned configuration, in the same manner as the leaning vehicle 1, 1d, the magnitude of moment of a force required for rotating the swing-arm support shaft Sh3 about the roll axis Ax1 by a unit angle with respect to the vehicle body 5 (drive-source support frame 2) is different from the magnitude of moment of a force required for rotating the swing-arm support shaft Sh3 about the yaw axis Ax2 by the unit angle with respect to the vehicle body 5 (drive-source support frame 2). In this modification, the magnitude of moment of a force required for rotating the swing-arm support shaft Sh3 about the roll axis Ax1 by the unit angle with respect to the vehicle body 5 (drive-source support frame 2) is smaller than the magnitude of moment of a force required for rotating the swing-arm support shaft Sh3 about the yaw axis Ax2 by the unit angle with respect to the vehicle body 5 (drive-source support frame 2). The description of the magnitude relationship of the moment in the leaning vehicle 1e is equal to the description of the magnitude relationship of the moment in the leaning vehicle 1, 1d and hence, the repeated description will be omitted.

### [Advantageous effect]

According to the leaning vehicle 1 e, for the same reason as the leaning vehicle 1, 1d, it is possible to obtain advantageous effects equivalent to advantageous effects which can be obtained when appropriate deflection characteristics and torsional characteristics are given to the swing arm 8.

### (Sixth modification)

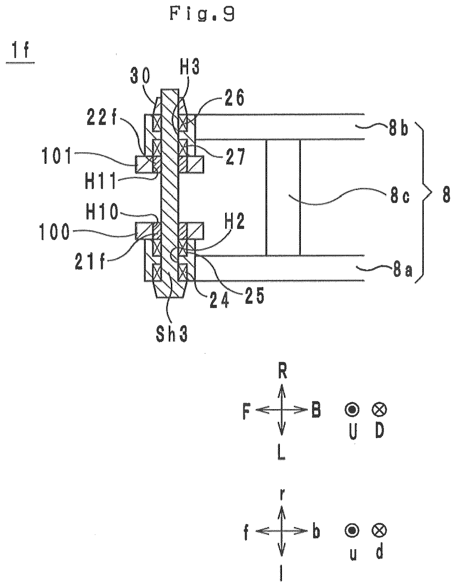

Hereinafter, the leaning vehicle 1f according to a sixth modification will be described with reference to drawings. FIG. 9 is a cross-sectional view of a portion surrounded by the circle C shown in FIG. 1. FIG. 9 is a cross-sectional view of the leaning vehicle 1f taken along a plane which is parallel to a leaning-vehicle (1f) front-back direction FB and a leaning-vehicle (1f) left-right direction LR, and which includes the center axis of the swing-arm support shaft Sh3.

In the leaning vehicle 1, as shown in FIG. 1, the swing-arm support shaft Sh3 is supported on the drive-source support frame 2 (vehicle body 5). On the other hand, in the leaning vehicle 1f, as shown in FIG. 9, the swing-arm support shaft Sh3 is supported on swing-arm-support-shaft support members 100, 101.

The leaning vehicle 1f includes support members 21f, 22f and the swing-arm-support-shaft support members 100, 101. The swing-arm-support-shaft support member 100 is disposed at a position further leftward in the leftward direction l than the center of the leaning vehicle 1f in the left-right direction lr. A through hole H10 penetrates the swing-arm-support-shaft support member 100 in the left-right direction lr. The through holes H2, H10 communicate with each other, thus forming one through hole.

The swing-arm-support-shaft support member 101 is disposed at a position further rightward in the rightward direction r than the center of the leaning vehicle 1f in the left-right direction lr. A through hole H11 penetrates the swing-ami-support-shaft support member 101 in the left-right direction lr. The through holes H3, H11 communicate with each other, thus forming one through hole. The structure of the swing-arm-support-shaft support member 100, 101 of the leaning vehicle 1f is equal to the structure of the swing-arm-support-shaft support member 100 of the leaning vehicle 1d and hence, further description is omitted.

The support member 21f has a cylindrical shape having a center axis extending in the left-right direction lr. Accordingly, the through hole H20 (see FIG. 2) penetrates the support member 21f in the left-right direction lr. The support member 21f is disposed in the through hole H10. The outer peripheral surface of the support member 21f is brought into close contact with the inner peripheral surface of the through hole H10. The center axis of the support member 21f and the center axis of the through hole H10 are aligned with each other. The support member 22f has a cylindrical shape having a center axis extending in the left-right direction lr. Accordingly, the through hole H21 (see FIG. 2) penetrates the support member 22f in the left-right direction lr. The support member 22f is disposed in the through hole H11. The outer peripheral surface of the support member 22f is brought into close contact with the inner peripheral surface of the through hole H11. The center axis of the support member 22f and the center axis of the through hole H11 are aligned with each other. The support members 21f, 22f are made of an elastic material, such as rubber. Accordingly, the support members 21f, 22f can be elastically deformed. The structure of the support member 21f, 22f is equal to the structure of the support member 21, 22 and hence, the description of such a structure is omitted.

The swing-arm support shaft Sh3 is a bolt. The swing-arm support shaft Sh3 passes through the through holes H2, H3, H10, H11 in a penetrating manner in the left-right direction lr. Accordingly, the swing-arm support shaft Sh3 penetrates the support members 21f, 22f and the bearings 24 to 27 in the left-right direction lr. With such a configuration, the support members 21f, 22f are provided between the swing-arm support shaft Sh3 and the swing-arm-support-shaft support members 100, 101. The outer peripheral surface of the support member 21f is in contact with the swing-arm-support-shaft support member 100. The outer peripheral surface of the support member 22f is in contact with the swing-arm-support-shaft support member 101. The inner peripheral surfaces of the support members 21f, 22f are in contact with the swing-arm support shaft Sh3.

The right end portion of the swing-arm support shaft Sh3 protrudes from the through hole H3 in the rightward direction r. The nut 30 is fixed to the right end portion of the swing-arm support shaft Sh3. Other structures of the leaning vehicle 1f are equal to the corresponding structures of the leaning vehicle 1 and hence, the description of such structures is omitted.

In the leaning vehicle 1f having the above-mentioned configuration, when the swing-arm support shaft Sh3 receives a force in the upward direction u, the support members 21f, 22f are deformed by a relatively large amount such that the sizes of the through holes 210, 220 of the support members 21f, 22f in the up-down direction ud reduce. In the same manner, when the swing-arm support shaft Sh3 receives a force in the downward direction d, the support members 21f, 22f are deformed by a relatively large amount such that the sizes of the through holes 212, 222 of the support members 21f, 22f in the up-down direction ud reduce. Accordingly, the swing-arm support shaft Sh3 can be displaced in the up-down direction ud by a relatively large amount.

On the other hand, when the swing-arm support shaft Sh3 receives a force in the frontward direction f, the support members 21f, 22f are deformed by a relatively small amount. In the same manner, when the swing-arm support shaft Sh3 receives a force in the backward direction b, the support members 21f, 22f are deformed by a relatively small amount. Accordingly, the swing-arm support shaft Sh3 can be displaced in the front-back direction fb by a relatively small amount.

In the leaning vehicle 1f which includes the support members 21f, 22f having the above-mentioned configuration, in the same manner as the leaning vehicle 1, the magnitude of moment of a force required for rotating the swing-arm support shaft Sh3 about the roll axis Ax1 by the unit angle with respect to the vehicle body 5 (drive-source support frame 2) is different from the magnitude of moment of a force required for rotating the swing-arm support shaft Sh3 about the yaw axis Ax2 by the unit angle with respect to the vehicle body 5 (drive-source support frame 2). In this modification, the magnitude of moment of a force required for rotating the swing-arm support shaft Sh3 about the roll axis Ax1 by the unit angle with respect to the vehicle body 5 (drive-source support frame 2) is smaller than the magnitude of moment of a force required for rotating the swing-arm support shaft Sh3 about the yaw axis Ax2 by the unit angle with respect to the vehicle body 5 (drive-source support frame 2). The description of the magnitude relationship of the moment in the leaning vehicle 1f is equal to the description of the magnitude relationship of the moment in the leaning vehicle 1 and hence, the repeated description will be omitted.

### [Advantageous effect]

According to the leaning vehicle 1f, for the same reason as the leaning vehicle 1, it is possible to obtain advantageous effects equivalent to advantageous effects which can be obtained when appropriate deflection characteristics and torsional characteristics are given to the swing arm 8.

### (Seventh modification)

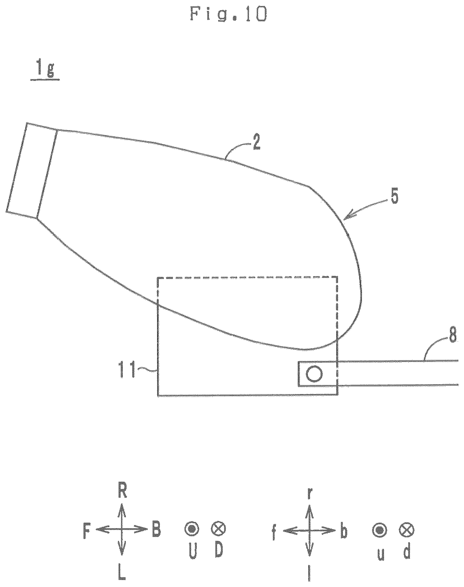

Hereinafter, the leaning vehicle 1g according to a seventh modification will be described with reference to drawings. FIG. 10 is a view when the leaning vehicle 1g is viewed in the rightward direction r. FIG. 10 shows the drive-source support frame 2, a drive source, and the swing arm 8.

In the leaning vehicle 1, the swing-arm support shaft Sh3 is supported on the drive-source support frame 2. On the other hand, in the leaning vehicle 1g, the swing-arm support shaft Sh3 is supported on the drive source 11. Further, in the leaning vehicle 1g, the support members 21, 22 (not shown in FIG. 10) are provided between the swing-arm support shaft Sh3 and the drive source 11.

### [Advantageous effect]

According to the leaning vehicle 1g, for the same reason as the leaning vehicle 1, it is possible to obtain advantageous effects equivalent to advantageous effects which can be obtained when appropriate deflection characteristics and torsional characteristics are given to the swing arm 8.

### (Support member)

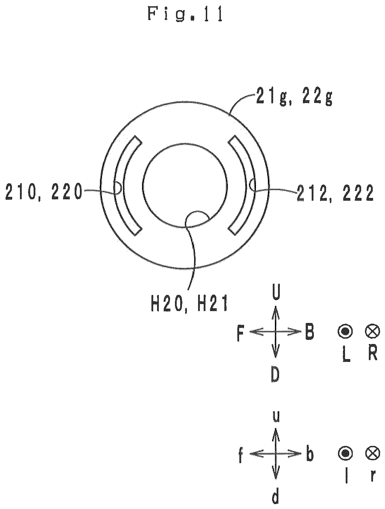

Hereinafter, a support member according to a modification will be described with reference to drawings. FIG. 11 is a view of a support member 21g, 22g as viewed in the rightward direction r.

The support member 21g, 22g differs from the support member 21, 22 with respect to positions of through holes 210, 220, 212, 222. In the support members 21, 22, as shown in FIG. 2, the through holes 210, 220 are respectively formed above the through holes H20, H21 of the support members 21, 22 in the upward direction u when viewed in the rightward direction r. Further, in the support members 21, 22, as shown in FIG. 2, the through holes 212, 222 are respectively formed below the through holes H20, H21 of the support members 21, 22 in the downward direction d when viewed in the rightward direction r. With such a configuration, the amounts of deformation of the support members 21, 22 with a force in the up-down direction ud applied to the support members 21, 22 are larger than the amounts of deformation of the support members 21, 22 with a force in the front-back direction fb applied to the support members 21, 22.

On the other hand, in the support members 21g, 22g, as shown in FIG. 11, the through holes 210, 220 are respectively formed in front of the through holes H20, H21 of the support members 21g, 22g in the frontward direction f when viewed in the rightward direction r. Further, in the support members 21g, 22g, as shown in FIG. 11, the through holes 212, 222 are respectively formed behind the through holes H20, H21 of the support members 21g, 22g in the backward direction b when viewed in the rightward direction r. With such a configuration, the amounts of deformation of the support members 21g, 22g with a force in the front-back direction fb applied to the support members 21g, 22g are larger than the amounts of deformation of the support members 21g, 22g with a force in the up-down direction ud applied to the support members 21g, 22g.

Assume a case where the support members 21g, 22g having the above-mentioned configuration is used in the leaning vehicle 1,1g. In such a case, the magnitude of moment of a force required for rotating the swing-arm support shaft Sh3 about the yaw axis Ax2 by the unit angle with respect to the vehicle body 5 (drive-source support frame 2) is smaller than the magnitude of moment of a force required for rotating the swing-arm support shaft Sh3 about the roll axis Ax1 by the unit angle with respect to the vehicle body 5 (drive-source support frame 2).

Assume a case where the support members 21g, 22g having the above-mentioned configuration is used in the leaning vehicle 1a. In such a case, the magnitude of moment of a force required for rotating the swing arm 8 about the yaw axis Ax2 by the unit angle with respect to the swing-arm support shaft Sh3 is smaller than the magnitude of moment of a force required for rotating the swing arm 8 about the roll axis Ax1 by the unit angle with respect to the swing-arm support shaft Sh3.

Assume a case where the support members 21g, 22g having the above-mentioned configuration is used in the leaning vehicle 1b. In such a case, the magnitude of moment of a force required for rotating the drive-wheel axle shaft Sh2 about the yaw axis Ax2 by the unit angle with respect to the swing arm 8 is smaller than the magnitude of moment of a force required for rotating the drive-wheel axle shaft Sh2 about the roll axis Ax1 by the unit angle with respect to the swing arm 8.

Assume a case where the support member 21g having the above-mentioned configuration is used in the leaning vehicle 1c. In such a case, the magnitude of moment of a force required for rotating the drive wheel 4 about the yaw axis Ax2 by the unit angle with respect to the drive-wheel axle shaft Sh2 is smaller than the magnitude of moment of a force required for rotating the drive wheel 4 about the roll axis Ax1 by the unit angle with respect to the drive-wheel axle shaft Sh2.

Assume a case where the support member 21g having the above-mentioned configuration is used in the leaning vehicle 1d, 1e. In such a case, the magnitude of moment of a force required for rotating the swing-arm support shaft Sh3 about the yaw axis Ax2 by the unit angle with respect to the vehicle body 5 (drive-source support frame 2) is smaller than the magnitude of moment of a force required for rotating the swing-arm support shaft Sh3 about the roll axis Ax1 by the unit angle with respect to the vehicle body 5 (drive-source support frame 2).

Assume a case where the support members 21g, 22g having the above-mentioned configuration are used in the leaning vehicle If. In such a case, the magnitude of moment of a force required for rotating the swing-arm support shaft Sh3 about the yaw axis Ax2 by the unit angle with respect to the vehicle body 5 (drive-source support frame 2) is smaller than the magnitude of moment of a force required for rotating the swing-arm support shaft Sh3 about the roll axis Ax1 by the unit angle with respect to the vehicle body 5 (drive-source support frame 2).

### (Other embodiments)

The embodiments and modifications described and/or illustrated in this specification are given for facilitating the understanding of this disclosure, and do not limit the concept of this disclosure. The above-mentioned embodiments and modifications may be adapted or altered without departing from the gist of the embodiments and modifications.

The gist includes any and all embodiments having equivalent elements, modifications, omissions, combinations (a combination of the feature of the embodiment and the feature of the modification, for example), alterations, and adaptations as would be appreciated by those who are skilled in the art based on the embodiments disclosed in this specification. The limitations in the claims are to be interpreted broadly based on the term employed in the claims, and not limited to the embodiments and modifications described in this specification or during the prosecution of this application. Such embodiments and modifications are to be construed as non-exclusive. For example, in this specification, the term "preferably" or "may" is non-exclusive and means "preferably, but not limited to" or "may be ..., but not limited to".

The leaning vehicle 1, 1a to 1g includes one steerable wheel 3. However, the leaning vehicle 1, 1a to 1g may include two or more steerable wheels. Further, the leaning vehicle 1, 1a to 1g includes one drive wheel 4. However, the leaning vehicle 1, 1a to 1g may include two or more drive wheels.

The through holes 210, 220, 212, 222 are formed in the support members 21, 22. With such a configuration, the amounts of deformation of the support members 21, 22 with a force in the up-down direction ud applied to the support members 21, 22 are different from the amounts of deformation of the support members 21, 22 with a force in the front-back direction fb applied to the support members 21, 22. However, a method for making the amounts of deformation of the support members 21, 22 with a force in the up-down direction ud applied to the support members 21, 22 different from the amounts of deformation of the support members 21, 22 with a force in the front-back direction fb applied to the support members 21, 22 is not limited to such a method. Notches may be formed on the outer peripheral surfaces or inner peripheral surfaces of the support members 21, 22. Further, the support members 21, 22 may be formed by combining two or more kinds of materials having different hardness. The method used for the support members 21, 22 may also be used for the support member 21a to 21g, 22a, 22b, 22f, 22g.

In the leaning vehicle 1, 1a to 1c, the rear end portion of the drive-source support frame 2 is positioned between the front end portion of the swing-arm left portion 8a and the front end portion of the swing-arm right portion 8b. However, the rear end portion of the drive-source support frame 2 may have the structure in which the rear end portion is branched into a drive-source-support-frame left portion and a drive-source-support-frame right portion which are arranged in the left-right direction 1r. In this case, the front end portion of the swing arm 8 is positioned between the drive-source-support-frame left portion and the drive-source-support-frame right portion. In the leaning vehicle 1d to 1f, the front end portion of the swing arm 8 may be positioned between the swing-arm-support-shaft support member 100 and the swing-arm-support-shaft support member 101.

In the leaning vehicle 1g, the rear end portion of the drive source 11 is positioned between the front end portion of the swing-arm left portion 8a and the front end portion of the swing-arm right portion 8b. However, the rear end portion of the drive source 11 may have the structure in which the rear end portion is branched into a drive-source left portion and a drive-source right portion which are arranged in the left-right direction 1r. In this case, the front end portion of the swing arm 8 is positioned between the drive-source left portion and the drive-source right portion.

In the leaning vehicle 1, 1a to 1g, the swing arm 8 is supported by two portions, that is, a portion of the drive-wheel axle shaft Sh2 which is positioned to the left of the drive wheel 4 in the leftward direction 1 and a portion of the drive-wheel axle shaft Sh2 which is positioned to the right of the drive wheel 4 in the rightward direction r. However, the swing arm 8 may be supported by either one of the portion of the drive-wheel axle shaft Sh2 which is positioned to the left of the drive wheel 4 in the leftward direction 1 or the portion of the drive-wheel axle shaft Sh2 which is positioned to the right of the drive wheel in the rightward direction r.

In the leaning vehicle 1, 1a to 1g, the swing-arm support shaft Sh3 is directly supported on the drive-source support frame 2, or is supported on the drive-source support frame 2 via the swing-arm-support-shaft support member 100, 102. However, the swing-arm support shaft Sh3 may be supported on the drive source 11, for example. In this case, the swing-arm support shaft Sh3 is supported on the drive-source support frame 2 via the drive source 11.

The leaning vehicle 1, 1a to 1g includes a chain-drive-type transmission mechanism. However, the leaning vehicle 1, 1a to 1g may include a belt-drive-type transmission mechanism, or may include a shaft-drive-type transmission mechanism.

In the leaning vehicle 1a to 1f, in the same manner as the leaning vehicle 1g, the swing-arm support shaft Sh3 may be supported on the drive source 11.

### REFERENCE SIGNS LIST

1, 1a, 1b, 1c, 1d, 1e, 1f, 1g: leaning vehicle
2: drive-source support frame
3: steerable wheel
4: drive wheel
5: vehicle body
7: steering mechanism
8: swing arm
8a: swing-arm left portion
8b: swing-arm right portion
8c: swing-arm connecting portion
10: seat
11: drive source
21, 21a, 21b, 21c, 21d, 21e, 21f, 21g, 22, 22a, 22b, 22f, 22g: support member
23, 23b, 23c: collar
24, 24a, 24b, 24c, 25, 25a, 25b, 25c, 26, 27: bearing
30, 50, 104a: nut
40: sprocket
100, 101: swing-arm-support-shaft support member
102a to 102c: mounting member
210, 212, 220, 222: through hole
Ax1: roll axis
Ax2: yaw axis
H1 to H11, H20, H21: through hole
Sh1: steerable-wheel axle shaft
Sh2: drive-wheel axle shaft
Sh3: swing-arm support shaft

## Claims

1. A leaning vehicle comprising:
a vehicle body leaning in a leaning-vehicle leftward direction when the leaning vehicle turns left, and leaning in a leaning-vehicle rightward direction when the leaning vehicle turns right, the vehicle body including a drive source configured to generate a driving force, and a drive-source support frame which supports the drive source;
a swing-arm support shaft supported on the vehicle body and extending in a vehicle-body left-right direction;
a swing arm where a front portion of the swing arm is supported on the swing-arm support shaft such that the swing arm is swingable with respect to the vehicle body about a center axis of the swing-arm support shaft;
a drive-wheel axle shaft supported on a rear portion of the swing arm and extending in the vehicle-body left-right direction;
a drive wheel which is supported on the drive-wheel axle shaft such that the drive wheel is rotatable about a center axis of the drive-wheel axle shaft, the drive wheel being rotated by a driving force generated by the drive source; and
a support member which is elastically deformable, the support member having at least one of structures (A) to (D), wherein
(A) the support member has a structure in which the support member is provided between the swing-arm support shaft and the vehicle body, and a magnitude of moment of a force required for rotating the swing-arm support shaft about a roll axis of the leaning vehicle by a unit angle with respect to the vehicle body is different from a magnitude of moment of a force required for rotating the swing-arm support shaft about a yaw axis of the leaning vehicle by the unit angle with respect to the vehicle body,
(B) the support member has a structure in which the support member is provided between the swing-arm support shaft and the swing arm, and a magnitude of moment of a force required for rotating the swing arm about the roll axis of the leaning vehicle by the unit angle with respect to the swing-arm support shaft is different from a magnitude of moment of a force required for rotating the swing arm about the yaw axis of the leaning vehicle by the unit angle with respect to the swing-arm support shaft,
(C) the support member has a structure in which the support member is provided between the drive-wheel axle shaft and the swing arm, and a magnitude of moment of a force required for rotating the drive-wheel axle shaft about the roll axis of the leaning vehicle by the unit angle with respect to the swing arm is different from a magnitude of moment of a force required for rotating the drive-wheel axle shaft about the yaw axis of the leaning vehicle by the unit angle with respect to the swing arm, and
(D) the support member has a structure in which the support member is provided between the drive-wheel axle shaft and the drive wheel, and a magnitude of moment of a force required for rotating the drive wheel about the roll axis of the leaning vehicle by the unit angle with respect to the drive-wheel axle shaft is different from a magnitude of moment of a force required for rotating the drive wheel about the yaw axis of the leaning vehicle by the unit angle with respect to the drive-wheel axle shaft.

2. The leaning vehicle according to claim 1, wherein
the support member has the structure (A), and is provided between the swing-arm support shaft and the vehicle body such that the support member comes into contact with the swing-arm support shaft and the vehicle body.

3. The leaning vehicle according to claim 1, wherein the support member has the structure (B), and is provided between the swing-arm support shaft and the swing arm such that the support member comes into contact with the swing-arm support shaft and the swing arm.

4. The leaning vehicle according to claim 1, wherein the support member has the structure (C), and is provided between the drive-wheel axle shaft and the swing arm such that the support member comes into contact with the drive-wheel axle shaft and the swing arm.

5. The leaning vehicle according to claim 1, wherein
the support member has the structure (D),
the leaning vehicle further includes a bearing provided between the drive wheel and the drive-wheel axle shaft,
the drive-wheel axle shaft penetrates the bearing in the vehicle-body left-right direction, and
the support member is provided between the bearing and the drive wheel such that the support member comes into contact with the bearing and the drive wheel.

6. The leaning vehicle according to claim 1, wherein
the support member has the structure (A),
the leaning vehicle further includes a swing-arm-support-shaft support member supported on the vehicle body, and supporting the swing-arm support shaft, and
the support member is provided between the vehicle body and the swing-arm-support-shaft support member.

7. The leaning vehicle according to claim 1, wherein
the support member has the structure (A),
the leaning vehicle further includes a swing-arm-support-shaft support member supported on the vehicle body, and supporting the swing-arm support shaft, and
the support member is provided between the swing-arm support shaft and the swing-arm-support-shaft support member such that the support member comes into contact with the swing-arm support shaft and the swing-arm-support-shaft support member.
